(19) Europäisches Patentamt
European Patent Office
Office européen des brevets

(11) **EP 4 475 083 A1**

(12) **EUROPEAN PATENT APPLICATION**
published in accordance with Art. 153(4) EPC

(43) Date of publication:
**11.12.2024 Bulletin 2024/50**

(21) Application number: **23762691.6**

(22) Date of filing: **30.01.2023**

(51) International Patent Classification (IPC):
**G06T 17/00** *(2006.01)*

(52) Cooperative Patent Classification (CPC):
**G06T 17/00**

(86) International application number:
**PCT/CN2023/073867**

(87) International publication number:
**WO 2023/165290 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.03.2022 CN 202210209676**

(71) Applicant: **Huawei Technologies Co., Ltd.
Shenzhen, Guangdong 518129 (CN)**

(72) Inventors:
• **LU, Fan**
  **Shenzhen, Guangdong 518129 (CN)**
• **ZHU, Minchao**
  **Shenzhen, Guangdong 518129 (CN)**
• **ZUO, Meng**
  **Shenzhen, Guangdong 518129 (CN)**
• **SHU, Jiaming**
  **Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND APPARATUS, AND ELECTRONIC DEVICE AND STORAGE MEDIUM**

(57)    This application relates to a data processing method and apparatus, an electronic device, and a storage medium. The method is applied to a processor, and includes: The processor determines a first feature matrix based on an input feature matrix, where the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M. The processor determines a first intermediate result based on the first feature matrix and a weight matrix. The processor determines, based on an index matrix corresponding to the input feature matrix and a configuration parameter for the data processing, a rule set for the data processing and an index matrix corresponding to an output matrix. The processor determines the output matrix based on the rule set and the first intermediate result. According to embodiments of this application, operation efficiency of the processor can be improved, and then data processing performance of the processor is improved.

FIG. 4

S410 A processor determines a first feature matrix based on an input feature matrix

S420 The processor determines a first intermediate result based on the first feature matrix and a weight matrix

S430 The processor determines, based on an index matrix corresponding to the input feature matrix and a configuration parameter for data processing, a rule set for the data processing and an index matrix corresponding to an output matrix

S440 The processor determines the output matrix based on the rule set and the first intermediate result

**Description**

This application claims priority to Chinese Patent Application No. 202210209676.6, filed with the China National Intellectual Property Administration on March 4, 2022 and entitled "DATA PROCESSING METHOD AND APPARATUS, ELECTRONIC DEVICE, AND STORAGE MEDIUM", which is incorporated herein by reference in its entirety.

**TECHNICAL FIELD**

This application relates to the field of computer technologies, and in particular, to a data processing method and apparatus, an electronic device, and a storage medium.

**BACKGROUND**

With rapid development of deep learning, the conventional automobile industry is combined with information technologies, making great progress in self-driving technologies. Environment sensing plays an irreplaceable role in self-driving. For example, a sensor such as a lidar is usually used to scan an ambient environment of a vehicle, to obtain point cloud data; and the ambient environment of the vehicle is sensed by processing the point cloud data.

The point cloud data is featured by disorderliness, structurelessness, and the like. When the point cloud data is processed, the point cloud data is usually first voxelized to obtain voxel data. Because a sparse rate of the voxel data obtained after voxelization of the point cloud data is very high, the voxel data may be processed through sparse convolution (sparse convolution, SC) or submanifold sparse convolution (submanifold sparse convolution, SSC).

Currently, when performing sparse convolution SC or submanifold sparse convolution SSC on the voxel data obtained after voxelization of the point cloud data, a processor usually first establishes a calculation rule set based on locations of valid feature points in the voxel data, and configuration parameters (for example, a size and a stride (stride) of a convolution kernel/filter (filter), and other parameters) of the sparse convolution SC or the submanifold sparse convolution SSC. The calculation rule set includes calculation rules of all multiply-accumulate operations related to the sparse convolution SC or the submanifold sparse convolution SSC. Then, a multiplication calculation task and an accumulation calculation task are sequentially generated based on the calculation rule set, and are distributed to each thread for calculation.

However, in the foregoing manner, when the processor performs the sparse convolution SC or the submanifold sparse convolution SSC, there is strong dependency on the calculation rule set. Consequently, operation efficiency is low, and data processing performance is affected.

**SUMMARY**

In view of this, a data processing method and apparatus, an electronic device, and a storage medium are provided.

According to a first aspect, an embodiment of this application provides a data processing method, applied to a processor. The method includes: The processor determines a first feature matrix based on an input feature matrix, where the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M. The processor determines a first intermediate result based on the first feature matrix and a weight matrix. The processor determines, based on an index matrix corresponding to the input feature matrix and a configuration parameter for the data processing, a rule set for the data processing and an index matrix corresponding to an output matrix. The processor determines the output matrix based on the rule set and the first intermediate result.

In this embodiment of this application, the processor can determine the first feature matrix based on the input feature matrix, and determine the first intermediate result based on the first feature matrix and the weight matrix. In addition, the processor can determine, based on the index matrix corresponding to the input feature matrix and the configuration parameter for the data processing, the rule set for the data processing and the index matrix corresponding to the output matrix; and then determine the output matrix based on the rule set and the first intermediate result. In this manner, the processor can directly perform a matrix operation in a data processing process, to avoid dependency on a calculation rule set, fully release computing power of the processor, improve operation efficiency of the processor, and further improve data processing performance of the processor.

According to the first aspect, in a first possible implementation of the data processing method, the determining, based on an index matrix corresponding to the input feature matrix and a configuration parameter for the data processing, a rule set for the data processing and an index matrix corresponding to an output matrix includes: determining, based on the index matrix corresponding to the input feature matrix and the configuration parameter for the data processing, a quantity of output points for the data processing and an index location of each output point; determining the index matrix corresponding to the output matrix based on the index location of each output point; and determining the rule set for the data processing based on the quantity of output points, the index matrix corresponding to the input feature matrix, and the configuration parameter for the data processing.

In this embodiment of this application, the processor can determine the quantity of output points for the data processing and the index location of each output point based on the index matrix corresponding to the input feature matrix and the configuration parameter for the data processing, determine the index matrix corresponding to the output matrix based on the index location of each output point, and then determine the rule set for the data processing based on the quantity of output points, the index matrix corresponding to the input feature matrix, and the configuration parameter for the data processing. In this way, the index matrix that serves as an output and corresponds to the output matrix, and the rule set for recombining the first intermediate result can be determined, to facilitate subsequent processing.

According to the first aspect or the first possible implementation of the first aspect, in a second possible implementation of the data processing method, the rule set is a set of rules used when the processor recombines the first intermediate result to obtain a second intermediate result. The rules in the rule set indicate a correspondence between a first location in the second intermediate result and a second location in the first intermediate result.

In this embodiment of this application, the rule set is the set of rules used when the processor recombines the first intermediate result to obtain the second intermediate result. The rules in the rule set indicate the correspondence between the first location in the second intermediate result and the second location in the first intermediate result. According to the rules in the rule set, the processor can recombine the first intermediate result including redundant data, to obtain the second intermediate result, thereby ensuring correctness of subsequent data processing.

According to the second possible implementation of the first aspect, in a third possible implementation of the data processing method, the rule set is represented as K rule matrices. The rule matrix includes L rows, and the L rows in the rule matrix are sorted in ascending order of first locations.

In this embodiment of this application, the rule set is represented as the K rule matrices, each rule matrix includes L rows, and the L rows in each rule matrix are sorted in ascending order of the first locations. Therefore, the first location in each rule matrix can be consecutive, and then continuity of a subsequent data writing location can be ensured. In this manner, in a subsequent process of recombining the first intermediate result to generate the second intermediate result, the second intermediate result can be written to a memory by using a sequential write operation, so that a random write operation is avoided. Therefore, data access efficiency can be improved, and then the data processing performance of the processor can be improved.

According to any one of first aspect or the first possible implementation of the first aspect to the third possible implementation of the first aspect, in a fourth possible implementation of the data processing method, the determining the output matrix based on the rule set and the first intermediate result includes: recombining the first intermediate result based on the rule set, to obtain the second intermediate result; and determining the output matrix based on the second intermediate result.

In this embodiment of this application, the processor can recombine, based on the rule set, the first intermediate result, to obtain the second intermediate result that does not include the redundant data, and then obtain the output matrix based on the second intermediate result, so that a correct data processing result can be obtained.

According to the fourth possible implementation of the first aspect, in a fifth possible implementation of the data processing method, the recombining the first intermediate result based on the processing rule set, to obtain the second intermediate result includes: reading data from the first intermediate result based on a second location indicated by each rule in the rule set; and writing the read data onto a first location indicated by each rule, to obtain the second intermediate result.

In this embodiment of this application, the processor can read data from the first intermediate result respectively based on the second location indicated by each rule in the rule set, and write the read data respectively onto the first location indicated by each rule, to obtain the second intermediate result. In this manner, the processor can recombine the first intermediate result including the redundant data, to obtain the second intermediate result that does not include the redundant data, so that redundant data caused by matrix multiplication in the data processing process can be eliminated, and correctness of subsequent data processing can be ensured.

According to the fourth possible implementation of the first aspect, in a sixth possible implementation of the data processing method, the second intermediate result includes K third feature matrices having a size of L rows and $C_{out}$ columns, and K and $C_{out}$ are positive integers. The determining the output matrix based on the second intermediate result includes: adding the K third feature matrices having a size of L rows and $C_{out}$ columns to obtain the output matrix, where a size of the output matrix is L rows and $C_{out}$ columns.

In this embodiment of this application, the processor can add the K third feature matrices having a size of L rows and $C_{out}$ columns to obtain the output matrix, so that the output matrix can be quickly and accurately obtained based on the second intermediate result, and data processing efficiency is improved.

According to any one of the first aspect or the first possible implementation of the first aspect to the sixth possible implementation of the first aspect, in a seventh possible implementation of the data processing method, the determining a first feature matrix based on an input feature matrix includes: adding (N - M) rows of auxiliary data after a last row of the input feature matrix, to obtain the first feature matrix, where at least one of the (N - M) rows is an all-zero row.

In this embodiment of this application, the first feature matrix is obtained by adding the (N - M) rows of auxiliary data after the last row of the input feature matrix, where at least one of the (N - M) added rows is an all-zero row. Therefore, in a subsequent data processing process, invalid redundant data can be overwritten by a zero value in the all-zero row, to ensure correctness of a final data processing result.

According to any one of the first aspect or the first possible implementation of the first aspect to the seventh possible implementation of the first aspect, in an eighth possible implementation of the data processing method, the weight matrix includes K matrices having a size of $C_{in}$ rows and $C_{out}$ columns. The determining a first intermediate result based on the first feature matrix and a weight matrix includes: separately multiplying the first feature matrix by the K matrices having a size of $C_{in}$ rows and $C_{out}$ columns, to obtain the first intermediate result, where the first intermediate result includes K second feature matrices having a size of N rows and $C_{out}$ columns.

In this embodiment of this application, when the first intermediate result is determined, the first feature matrix is directly separately multiplied by the K matrices having a size of $C_{in}$ rows and $C_{out}$ columns in the weight matrix, to obtain the first intermediate result including the redundant data. According to the matrix multiplication based on redundancy calculation, dependency on the calculation rule set in a matrix multiplication process can be avoided, the computing power of the processor can be fully released, and the operation efficiency can be improved. In addition, scattered access of a large quantity of small data blocks brought by the calculation rule set can also be avoided, and then the data processing performance of the processor is improved.

According to a second aspect, an embodiment of this application provides a data processing apparatus, used in a processor. The apparatus includes: a feature matrix determining module, configured to determine a first feature matrix based on an input feature matrix, where the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M; an intermediate result determining module, configured to determine a first intermediate result based on the first feature matrix and a weight matrix; a rule set determining module, configured to determine, based on an index matrix corresponding to the input feature matrix and a configuration parameter for the data processing, a rule set for the data processing and an index matrix corresponding to an output matrix; and an output matrix determining module, configured to determine the output matrix based on the rule set and the first intermediate result.

In this embodiment of this application, the processor can determine the first feature matrix based on the input feature matrix, and determine the first intermediate result based on the first feature matrix and the weight matrix. In addition, the processor can determine, based on the index matrix corresponding to the input feature matrix and the configuration parameter for the data processing, the rule set for the data processing and the index matrix corresponding to the output matrix; and then determine the output matrix based on the rule set and the first intermediate result. In this manner, the processor can directly perform a matrix operation in a data processing process, to avoid dependency on a calculation rule set, fully release computing power of the processor, improve operation efficiency of the processor, and further improve data processing performance of the processor.

According to the second aspect, in a first possible implementation of the data processing apparatus, the rule set determining module includes: an index location determining submodule, configured to determine, based on the index matrix corresponding to the input feature matrix and the configuration parameter for the data processing, a quantity of output points for the data processing and an index location of each output point; an index matrix determining submodule, configured to determine the index matrix corresponding to the output matrix based on the index location of each output point; and a rule set determining submodule, configured to determine the rule set for the data processing based on the quantity of output points, the index matrix corresponding to the input feature matrix, and the configuration parameter for the data processing.

In this embodiment of this application, the processor can determine the quantity of output points for the data processing and the index location of each output point based on the index matrix corresponding to the input feature matrix and the configuration parameter for the data processing, determine the index matrix corresponding to the output matrix based on the index location of each output point, and then determine the rule set for the data processing based on the quantity of output points, the index matrix corresponding to the input feature matrix, and the configuration parameter for the data processing. In this way, the index matrix that serves as an output and corresponds to the output matrix, and the rule set for recombining the first intermediate result can be determined, to facilitate subsequent processing.

According to the second aspect or the first possible implementation of the second aspect, in a second possible implementation of the data processing apparatus, the rule set is a set of rules used when the processor recombines the first intermediate result to obtain a second intermediate result. The rules in the rule set indicate a correspondence between a first location in the second intermediate result and a second location in the first intermediate result.

In this embodiment of this application, the rule set is the set of rules used when the processor recombines the first intermediate result to obtain the second intermediate result. The rules in the rule set indicate the correspondence between the first location in the second intermediate result and the second location in the first intermediate result. According to the rules in the rule set, the processor can recombine the first intermediate result including redundant data, to obtain the second intermediate result, thereby ensuring correctness of subsequent data processing.

According to the second possible implementation of the second aspect, in a third possible implementation of the data processing apparatus, the rule set is represented as K rule matrices. The rule matrix includes L rows, and the L rows in the rule matrix are sorted in ascending order of first locations, where L is a positive integer.

In this embodiment of this application, the rule set is represented as the K rule matrices, each rule matrix includes L rows, and the L rows in each rule matrix are sorted in ascending order of the first locations. Therefore, the first location in each rule matrix can be consecutive, and then continuity of a subsequent data writing location can be ensured. In this manner, in a subsequent process of recombining the first intermediate result to generate the second intermediate result, the second intermediate result can be written to a memory by using a sequential write operation, so that a random write operation is avoided. Therefore, data access efficiency can be improved, and then the data processing performance of the processor can be improved.

According to any one of the second aspect or the first possible implementation of the second aspect to the third possible implementation of the second aspect, in a fourth possible implementation of the data processing apparatus, the output matrix determining module includes: an intermediate result recombination submodule, configured to recombine the first intermediate result based on the rule set, to obtain the second intermediate result; and an output matrix determining submodule, configured to determine the output matrix based on the second intermediate result.

In this embodiment of this application, the processor can recombine, based on the rule set, the first intermediate result, to obtain the second intermediate result that does not include the redundant data, and then obtain the output matrix based on the second intermediate result, so that a correct data processing result can be obtained.

According to the fourth possible implementation of the second aspect, in a fifth possible implementation of the data processing apparatus, the intermediate result recombination submodule is configured to: read data from the first intermediate result based on a second location indicated by each rule in the rule set; and write the read data onto a first location indicated by each rule, to obtain the second intermediate result.

In this embodiment of this application, the processor can read data from the first intermediate result respectively based on the second location indicated by each rule in the rule set, and write the read data respectively onto the first location indicated by each rule, to obtain the second intermediate result. In this manner, the processor can recombine the first intermediate result including the redundant data, to obtain the second intermediate result that does not include the redundant data, so that redundant data caused by matrix multiplication in the data processing process can be eliminated, and correctness of subsequent data processing can be ensured.

According to the fourth possible implementation of the second aspect, in a sixth possible implementation of the data processing apparatus, the second intermediate result includes K third feature matrices having a size of L rows and $C_{out}$ columns, where K and $C_{out}$ are positive integers. The output matrix determining submodule is configured to add the K third feature matrices having a size of L rows and $C_{out}$ columns, to obtain the output matrix, where a size of the output matrix is L rows and $C_{out}$ columns.

In this embodiment of this application, the processor can add the K third feature matrices having a size of L rows and $C_{out}$ columns to obtain the output matrix, so that the output matrix can be quickly and accurately obtained based on the second intermediate result, and data processing efficiency is improved.

According to any one of the second aspect or the first possible implementation of the second aspect to the sixth possible implementation of the second aspect, in a seventh possible implementation of the data processing apparatus, the feature matrix determining module includes: an auxiliary data adding submodule, configured to add (N - M) rows of auxiliary data after a last row of the input feature matrix, to obtain the first feature matrix, where at least one of the (N - M) rows is an all-zero row.

In this embodiment of this application, the first feature matrix is obtained by adding the (N - M) rows of auxiliary data after the last row of the input feature matrix, where at least one of the (N - M) added rows is an all-zero row. Therefore, in a subsequent data processing process, invalid redundant data can be overwritten by a zero value in the all-zero row, to ensure correctness of a final data processing result.

According to any one of the second aspect or the first possible implementation of the second aspect to the seventh possible implementation of the second aspect, in an eighth possible implementation of the data processing apparatus, the weight matrix includes K matrices having a size of $C_{in}$ rows and $C_{out}$ columns. The intermediate result determining module includes a matrix multiplication submodule, configured to separately multiply the first feature matrix by the K matrices having a size of $C_{in}$ rows and $C_{out}$ columns, to obtain the first intermediate result, where the first intermediate result includes K second feature matrices having a size of N rows and $C_{out}$ columns.

In this embodiment of this application, when the first intermediate result is determined, the first feature matrix is directly separately multiplied by the K matrices having a size of $C_{in}$ rows and $C_{out}$ columns in the weight matrix, to obtain the first intermediate result including the redundant data. According to the matrix multiplication based on redundancy calculation, dependency on the calculation rule set in a matrix multiplication process can be avoided, the computing power of the processor can be fully released, and the operation efficiency can be improved. In addition, scattered access of a large quantity of small data blocks brought by the calculation rule set can also be avoided, and then the data processing performance of the processor is improved.

According to a third aspect, an embodiment of this application provides a processor. The processor is configured to implement the data processing method according to one or more of the first aspect or the plurality of possible implementations of the first aspect.

In this embodiment of this application, the processor can determine a first feature matrix based on an input feature matrix, and determine a first intermediate result based on the first feature matrix and a weight matrix. In addition, the processor can determine, based on an index matrix corresponding to the input feature matrix and a configuration parameter for data processing, a rule set for the data processing and an index matrix corresponding to an output matrix; and then determine the output matrix based on the rule set and the first intermediate result. In this manner, the processor can directly perform a matrix operation in a data processing process, to avoid dependency on a calculation rule set, fully release computing power of the processor, improve operation efficiency of the processor, and further improve data processing performance of the processor.

According to a fourth aspect, an embodiment of this application provides an electronic device, including: a processor; and a memory configured to store instructions that can be executed by the processor. The processor is configured to implement the data processing method according to one or more of the first aspect or the plurality of possible implementations of the first aspect when executing the instructions.

In this embodiment of this application, the processor can determine a first feature matrix based on an input feature matrix, and determine a first intermediate result based on the first feature matrix and a weight matrix. In addition, the processor can determine, based on an index matrix corresponding to the input feature matrix and a configuration parameter for data processing, a rule set for the data processing and an index matrix corresponding to an output matrix; and then determine the output matrix based on the rule set and the first intermediate result. In this manner, the processor can directly perform a matrix operation in a data processing process, to avoid dependency on a calculation rule set, fully release computing power of the processor, improve operation efficiency of the processor, and further improve data processing performance of the processor.

According to a fifth aspect, an embodiment of this application provides a non-volatile computer-readable storage medium. The non-volatile computer-readable storage medium stores computer program instructions. When the computer program instructions are executed by a processor, the data processing method according to one or more of the first aspect or the plurality of possible implementations of the first aspect is implemented.

In this embodiment of this application, the processor can determine a first feature matrix based on an input feature matrix, and determine a first intermediate result based on the first feature matrix and a weight matrix. In addition, the processor can determine, based on an index matrix corresponding to the input feature matrix and a configuration parameter for data processing, a rule set for the data processing and an index matrix corresponding to an output matrix; and then determine the output matrix based on the rule set and the first intermediate result. In this manner, the processor can directly perform a matrix operation in a data processing process, to avoid dependency on a calculation rule set, fully release computing power of the processor, improve operation efficiency of the processor, and further improve data processing performance of the processor.

According to a sixth aspect, an embodiment of this application provides a computer program product, including computer-readable code or a non-volatile computer-readable storage medium carrying computer-readable code. When the computer-readable code is run in an electronic device, a processor in the electronic device performs the data processing method according to one or more of the first aspect or the plurality of possible implementations of the first aspect.

In this embodiment of this application, the processor can determine a first feature matrix based on an input feature matrix, and determine a first intermediate result based on the first feature matrix and a weight matrix. In addition, the processor can determine, based on an index matrix corresponding to the input feature matrix and a configuration parameter for data processing, a rule set for the data processing and an index matrix corresponding to an output matrix; and then determine the output matrix based on the rule set and the first intermediate result. In this manner, the processor can directly perform a matrix operation in a data processing process, to avoid dependency on a calculation rule set, fully release computing power of the processor, improve operation efficiency of the processor, and further improve data processing performance of the processor.

These aspects and other aspects of this application are more concise and more comprehensive in descriptions of the following (a plurality of) embodiments.

BRIEF DESCRIPTION OF DRAWINGS

The accompanying drawings included in this specification and constituting a part of this specification and this specification jointly show example embodiments, features, and aspects of this application, and are intended to explain the principles of this application.

FIG. 1 is a schematic diagram of an application scenario of a data processing method according to an embodiment of this application;
FIG. 2 is a schematic diagram of an architecture of an AI core in a neural network processing unit according to an embodiment of this application;
FIG. 3a is a schematic diagram of an input feature matrix according to an embodiment of this application;
FIG. 3b is a schematic diagram of an index matrix corresponding to an input feature matrix according to an embodiment of this application;
FIG. 3c is a schematic diagram of a weight matrix according to an embodiment of this application;
FIG. 4 is a flowchart of a data processing method according to an embodiment of this application;
FIG. 5 is a schematic diagram of a first feature matrix according to an embodiment of this application;
FIG. 6a is a schematic diagram of a first intermediate result according to an embodiment of this application;
FIG. 6b is a schematic diagram of a second feature matrix in a first intermediate result according to an embodiment of this application;
FIG. 7 is a schematic diagram of a processing process of determining a first intermediate result according to an embodiment of this application;
FIG. 8 is a schematic diagram of a circuit for determining a first intermediate result according to an embodiment of this application;
FIG. 9 is a schematic diagram of an index matrix corresponding to an output matrix according to an embodiment of this application;
FIG. 10 is a schematic diagram of a rule set for data processing according to an embodiment of this application;
FIG. 11 is a schematic diagram of a rule matrix according to an embodiment of this application;
FIG. 12 is a schematic diagram of a processing process of determining a rule set for data processing and an index matrix corresponding to an output matrix according to an embodiment of this application;
FIG. 13 is a schematic diagram of a circuit for determining a rule set for data processing and an index matrix corresponding to an output matrix according to an embodiment of this application;
FIG. 14 is a schematic diagram of recombining a first intermediate result according to an embodiment of this application;
FIG. 15 is a schematic diagram of a second intermediate result according to an embodiment of this application;
FIG. 16 is a schematic diagram of a processing process of recombining a first intermediate result according to an embodiment of this application;
FIG. 17 is a schematic diagram of a circuit for recombining a first intermediate result according to an embodiment of this application;
FIG. 18 is a schematic diagram of a processing process of determining an output matrix according to an embodiment of this application;
FIG. 19 is a schematic diagram of a circuit for determining an output matrix according to an embodiment of this application;
FIG. 20 is a schematic diagram of an output matrix according to an embodiment of this application;
FIG. 21 is a schematic diagram of a processing process of a data processing method according to an embodiment of this application; and
FIG. 22 is a block diagram of a data processing apparatus according to an embodiment of this application.

## DESCRIPTION OF EMBODIMENTS

The following describes various example embodiments, features, and aspects of this application in detail with reference to the accompanying drawings. Identical reference numerals in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

For ease of understanding embodiments of this application, the following first describes related terms used in this application.

Point cloud (point cloud): The point cloud is a dataset of points in space that may represent a three-dimensional shape or object. Location information of each point in the point cloud may be represented by a group of Cartesian coordinates (x, y, z). In addition to the location information, each point in the point cloud may further include information such as color and reflection intensity. Point cloud data can be obtained through a sensor such as a lidar, a depth camera, or a binocular camera, and can also be obtained in another manner. A manner of obtaining the point cloud data, a specific type of the sensor, and the like are not limited in this application.

Voxel (voxel): The voxel is an abbreviation of a volume pixel (volume pixel). Similar to a pixel, the voxel is the smallest unit of digital data in three-dimensional space segmentation.

Convolution (convolution): The convolution is an operator that generates a third function according to two functions $f$ and $g$, and may be represented according to a mathematical formula $\int_{-\infty}^{\infty} f(\tau)g(x-\tau)d\tau$. In the field of image processing/neural networks, $f(\tau)$ may be considered as an original pixel, and a set of all original pixels is an original image (feature map). $g(x-\tau)$ may be considered as an action point, and a set of all action points is a convolution kernel/filter (filter). After all action points on the convolution kernel/filter sequentially act on (multiply) the original pixels, a result of linear superposition (addition) is an output of the convolution.

For example, a convolution operation in the field of image processing/neural networks may be:

$$convolution\left(\begin{pmatrix} A11 & A12 & A13 \\ A21 & A22 & A23 \\ A31 & A32 & A33 \end{pmatrix}, \begin{pmatrix} F11 & F12 \\ F21 & F22 \end{pmatrix}\right) = \begin{pmatrix} B11 & B12 \\ B21 & B22 \end{pmatrix}$$

A matrix $\begin{pmatrix} A11 & A12 & A13 \\ A21 & A22 & A23 \\ A31 & A32 & A33 \end{pmatrix}$ is an original image matrix, $\begin{pmatrix} F11 & F12 \\ F21 & F22 \end{pmatrix}$ is a convolution kernel/filter matrix, $\begin{pmatrix} B11 & B12 \\ B21 & B22 \end{pmatrix}$ is an output matrix of a convolution operation, and elements in the output matrix $\begin{pmatrix} B11 & B12 \\ B21 & B22 \end{pmatrix}$ are determined in the following manner:

$$B11 = F11 \times A11 + F12 \times A12 + F21 \times A21 + F22 \times A22;$$

$$B12 = F11 \times A12 + F12 \times A13 + F21 \times A22 + F22 \times A23;$$

$$B21 = F11 \times A21 + F12 \times A22 + F21 \times A31 + F22 \times A32;$$

and

$$B22 = F11 \times A22 + F12 \times A23 + F21 \times A32 + F22 \times A33$$

Sparse convolution (sparse convolution, SC): A mathematical definition of the parse convolution is the same as that of the convolution (convolution), except that zero values are skipped in calculation.

For example, the sparse convolution SC may be:

$$SC\left(\begin{pmatrix} 0 & 0 & 0 & 0 \\ 0 & C22 & C23 & 0 \\ 0 & 0 & 0 & 0 \\ 0 & 0 & 0 & 0 \end{pmatrix}, \begin{pmatrix} F11 & F12 & F13 \\ F21 & F22 & F23 \\ F31 & F32 & F33 \end{pmatrix}\right) = \begin{pmatrix} D11 & D12 & D13 & D14 \\ D21 & D22 & D23 & D24 \\ D31 & D32 & D33 & D34 \\ 0 & 0 & 0 & 0 \end{pmatrix}$$

A matrix $\begin{pmatrix} 0 & 0 & 0 & 0 \\ 0 & C22 & C23 & 0 \\ 0 & 0 & 0 & 0 \\ 0 & 0 & 0 & 0 \end{pmatrix}$ is an original image matrix, $\begin{pmatrix} F11 & F12 & F13 \\ F21 & F22 & F23 \\ F31 & F32 & F33 \end{pmatrix}$ is a convolution

kernel/filter matrix, and $\begin{pmatrix} D11 & D12 & D13 & D14 \\ D21 & D22 & D23 & D24 \\ D31 & D32 & D33 & D34 \\ 0 & 0 & 0 & 0 \end{pmatrix}$ is an output matrix of the SC.

When the foregoing SC is performed, a padding (padding) parameter of the SC may be set to 1. To be specific, one row/column of zero values are padded on a periphery of the original image matrix, so that the original image matrix becomes a matrix having a size of 6×6, and then the operation is performed. Elements in the output matrix

$\begin{pmatrix} D11 & D12 & D13 & D14 \\ D21 & D22 & D23 & D24 \\ D31 & D32 & D33 & D34 \\ 0 & 0 & 0 & 0 \end{pmatrix}$ are determined in the following manner:

$D11 = F33 \times C22$; $D12 = F32 \times C22 + F33 \times C23$; $D13 = F31 \times C22 + F32 \times C23$; $D14 = F31 \times C23$;

$D21 = F23 \times C22$; $D22 = F22 \times C22 + F23 \times C23$; $D23 = F21 \times C22 + F22 \times C23$; $D24 = F21 \times C23$;

$D31 = F13 \times C22$; $D32 = F12 \times C22 + F13 \times C23$; $D33 = F11 \times C22 + F12 \times C23$; and $D34 = F11 \times C23$.

Submanifold sparse convolution (submanifold sparse convolution, SSC): The submanifold sparse convolution is an improvement of sparse convolution SC for a point cloud scenario. The submanifold sparse convolution supports a convolution configuration with consistent input and output sizes, and calculates only an output with a value at a corresponding input location, so that a sparse mode before and after an operation can remain unchanged. That is, sparse modes of an input and an output of the submanifold sparse convolution are the same.

For example, the submanifold sparse convolution SSC may be:

$$\text{SSC}\left( \begin{pmatrix} 0 & 0 & 0 & 0 \\ 0 & C22 & C23 & 0 \\ 0 & 0 & 0 & 0 \\ 0 & 0 & 0 & 0 \end{pmatrix}, \begin{pmatrix} F11 & F12 & F13 \\ F21 & F22 & F23 \\ F31 & F32 & F33 \end{pmatrix} \right) = \begin{pmatrix} 0 & 0 & 0 & 0 \\ 0 & E22 & E23 & 0 \\ 0 & 0 & 0 & 0 \\ 0 & 0 & 0 & 0 \end{pmatrix}$$

A matrix $\begin{pmatrix} 0 & 0 & 0 & 0 \\ 0 & C22 & C23 & 0 \\ 0 & 0 & 0 & 0 \\ 0 & 0 & 0 & 0 \end{pmatrix}$ is an original image matrix, $\begin{pmatrix} F11 & F12 & F13 \\ F21 & F22 & F23 \\ F31 & F32 & F33 \end{pmatrix}$ is a convolution

kernel/filter, and $\begin{pmatrix} 0 & 0 & 0 & 0 \\ 0 & E22 & E23 & 0 \\ 0 & 0 & 0 & 0 \\ 0 & 0 & 0 & 0 \end{pmatrix}$ is an output matrix of the SSC, where a sparse mode of the output matrix is the same as a sparse mode of the original image matrix.

When the foregoing SSC operation is performed, a padding (padding) parameter of the SSC operation may be set to 1. That is, one row/column of zero values are padded on a periphery of the original image matrix, so that the original image matrix becomes a matrix having a size of 6×6, and then the operation is performed. Elements in the output matrix

$$\begin{pmatrix} 0 & 0 & 0 & 0 \\ 0 & E22 & E23 & 0 \\ 0 & 0 & 0 & 0 \\ 0 & 0 & 0 & 0 \end{pmatrix}$$ are determined in the following manner:

$$E22 = F22 \times C22 + F23 \times C23;$$

and

$$E23 = F21 \times C22 + F22 \times C23$$

It should be noted that, operation processes of the convolution, the sparse convolution SC, and the submanifold sparse convolution SSC are only described above as examples. During actual application, specific values of configuration parameters (for example, parameters such as a size, a stride (stride, which may also be referred to as a step), and a padding (padding) of a convolution kernel/filter (filter)) of the convolution, the sparse convolution SC, and the submanifold sparse convolution SSC may be set based on an actual situation. This is not limited in this application.

In a conventional technology, because the voxel data obtained after voxelization of the point cloud data is sparse, when the voxel data is stored, feature data of valid feature points (points whose feature values are not all 0s) in the voxel data and locations of the valid feature points are usually stored in a matrix form.

When performing the sparse convolution SC or the submanifold sparse convolution SSC on the voxel data obtained after voxelization of the point cloud data, a processor usually first establishes a calculation rule set (rulebook) based on the locations of the valid feature points of the voxel data and the configuration parameters (for example, parameters such as a size, a stride (stride), and a padding (padding) of a convolution kernel/filter (filter)) of the sparse convolution SC or the submanifold sparse convolution SSC. The calculation rule set includes calculation rules of all multiply-accumulate operations related to the sparse convolution SC or the submanifold sparse convolution SSC. Then, feature data and a convolution kernel element of the valid feature points that participate in calculation are obtained based on the calculation rule set, and a multiplication calculation task and an accumulation calculation task are sequentially generated, and are distributed to each thread for calculation. The following describes the processing process by using submanifold sparse convolution SSC as an example.

For example, it is assumed that a size of a convolution kernel of the submanifold sparse convolution SSC is 3×3, a stride is 1, and a padding is 1. The convolution kernel includes nine elements, which are respectively a zeroth element, a first element, ..., and an eighth element. There are eight valid feature points (points whose feature values are not all 0s) in the voxel data obtained after voxelization of the point cloud data. Locations of the eight valid feature points a, b, c, d, e, f, and g are respectively shown as follows, where "-" indicates a location of an invalid feature point (point whose feature values are all 0s).

| - | - | - | - | - | - | - | - |
|---|---|---|---|---|---|---|---|
| - | - | a | b | c | d | - | - |
| - | - | - | - | - | e | - | - |
| - | - | - | - | f | - | - | - |
| - | - | - | - | g | - | - | - |
| - | - | - | h | - | - | - | - |
| - | - | - | - | - | - | - | - |
| - | - | - | - | - | - | - | - |

When performing the submanifold sparse convolution SSC on the voxel data, the processor first establishes the calculation rule set (rulebook) based on the size, the stride, and the padding of the convolution kernel, and the locations (locations a, b, c, d, e, f, and g) of the eight valid feature points. An example of the rulebook may be as follows:

| rulebook: |
|---|

(continued)

| |
|---|
| rule[0]: (c, e) |
| rule[1]: (d, e), (f, g) |
| rule[2]: (e, f), (g, h) |
| rule[3]: (a, b), (b, c), (c, d) |
| rule[4]: (v, v) for all v |
| rule[5]: (b, a), (c, b), (d, c) |
| rule[6]: (f, e), (h, g) |
| rule[7]: (e, d), (g, f) |
| rule[8]: (e, c) |

The rulebook herein is organized based on elements of the convolution kernel, where rule[u] represents a set of calculation rules related to a $u^{th}$ element of the convolution kernel, and u is a positive integer and $0 \leq u \leq 8$.

For example, rule[1] represents a set of calculation rules related to the first element of the convolution kernel. The calculation rule (d, e) means that the first element of the convolution kernel is multiplied by an input at the location d (that is, feature data of the valid feature point at the location d), and then a result of the multiplication is accumulated to an output at the location e. The calculation rule (f, g) means that the first element of the convolution kernel is multiplied by an input at the location f (that is, feature data of the valid feature point at the location f), and then a result of the multiplication is accumulated to an output at the location g.

Rule[4] represents a set of calculation rules related to the fourth element of the convolution kernel. The calculation rule (v, v) for all v means that the fourth element of the convolution kernel is multiplied by an input at a location v (that is, feature data of a valid feature point at the location v), and then a result of the multiplication is accumulated to an output of the location v, where the location v is any one of the locations a, b, c, d, e, f, and g.

After the rulebook is established, the processor obtains, based on the rulebook, feature data of the valid feature points that participate in calculation and convolution kernel elements, sequentially generates a multiplication calculation task and an accumulation calculation task, and distributes the multiplication calculation task and the accumulation calculation task to each thread for calculation.

Specifically, the processor organizes a set of calculation rules represented by each rule[u] into a calculation task in a same mode: Feature data of a valid feature point that needs to be calculated with the $u^{th}$ element of the convolution kernel is obtained and recombined based on input information of the rule[u], and a data matrix obtained through recombination and a weight matrix corresponding to the $u^{th}$ element of the convolution kernel are sent to an operation unit for matrix multiplication, to obtain an intermediate result; and then the intermediate result is accumulated to a corresponding output location and written back based on output information of the rule[u].

For example, input information of the rule[1] is the locations d and f, and output information is the locations e and g. When executing the rule[1], the processor obtains feature data of valid feature points corresponding to the locations d and f, recombines the feature data into a matrix X1, sends the matrix X1 and a weight matrix corresponding to the first element of the convolution kernel to the operation unit for matrix multiplication, to obtain a matrix X2 (intermediate result), and then respectively accumulates, based on the output information of the rule[1], data corresponding to the locations d and f in the matrix X2 to data corresponding to the locations e and g.

However, in this technical solution, when the processor performs the sparse convolution SC or the submanifold sparse convolution SSC, there is strong dependency on the calculation rule set (that is, execution of all multiply-accumulate operations related to the SC or the SSC depends on calculation rules). Consequently, operation efficiency is low, and data processing performance is affected.

To resolve the foregoing technical problem, this application provides a data processing method, applied to a processor. The data processing method includes: The processor determines a first feature matrix based on an input feature matrix, where the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M. The processor determines a first intermediate result based on the first feature matrix and a weight matrix. The processor determines, based on an index matrix corresponding to the input feature matrix and a configuration parameter for data processing, a rule set for the data processing and an index matrix corresponding to an output matrix. The processor determines the output matrix based on the rule set and the first intermediate result.

According to the data processing method in embodiments of this application, a matrix operation can be directly performed in a data processing process, to avoid dependency on a calculation rule set, fully release computing power of the processor, improve operation efficiency of the processor, and further improve data processing performance of the processor.

The data processing method in embodiments of this application may be used to implement sparse convolution SC or submanifold sparse convolution SSC on the processor, or may be used to implement other data processing similar to SC and SSC on the processor. The processor may be a central processing unit (central processing unit, CPU), a graphics processing unit (graphics processing unit, GPU), a neural network processing unit (neural network processing unit, NPU), or any other processor that can perform a matrix operation. A specific type of the processor is not limited in this application.

For example, the data processing method in embodiments of this application may be applied to a neural network processing unit NPU, to provide an implementation solution of sparse convolution SC or submanifold sparse convolution SSC in a point cloud scenario for the neural network processing unit NPU.

It should be noted that, in addition to being applied to the point cloud scenario, the data processing method in embodiments of this application may be further applied to another scenario in which sparse convolution SC or submanifold sparse convolution SSC needs to be performed. A specific application scenario of the data processing method is not limited in this application.

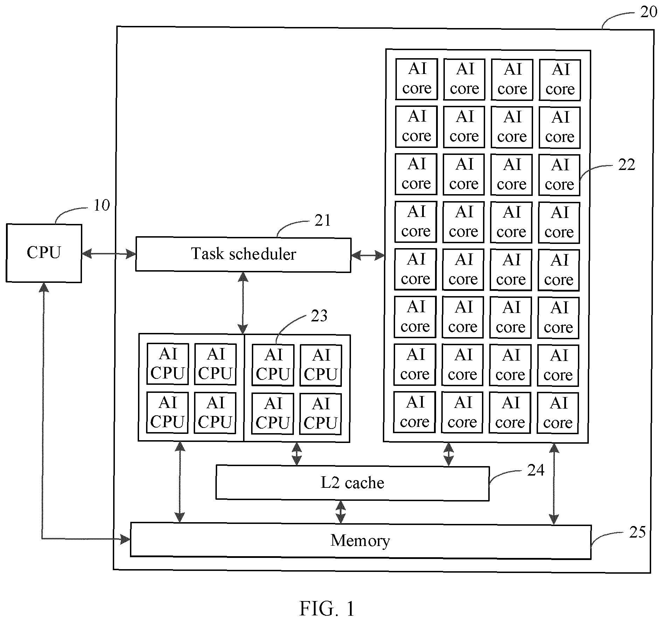

FIG. 1 is a schematic diagram of an application scenario of a data processing method according to an embodiment of this application. As shown in FIG. 1, the data processing method in embodiments of this application is applied to a neural network processing unit 20. The neural network processing unit 20 is connected to a central processing unit CPU 10. The neural network processing unit 20 may receive, from the CPU 10, a data processing task (for example, performing sparse convolution SC or submanifold sparse convolution SSC), a weight matrix, an input feature matrix, and an index matrix corresponding to the input feature matrix; process the input feature matrix according to the data processing method in embodiments of this application, to obtain an output matrix and an index matrix corresponding to the output matrix; and then send the output matrix and the index matrix corresponding to the output matrix to the CPU 10, so that the CPU 10 performs subsequent processing.

As shown in FIG. 1, the neural network processing unit 20 may be considered as a system on chip (system on chip, SoC), and includes a task scheduler (task scheduler) 21, 32 AI cores (AI core) 22 that provide artificial intelligence (artificial intelligence, AI) computing power, eight AI CPUs 23 that provide general-purpose computing power, a level 2 (level 2, L2) cache 24, and a memory 25.

The task scheduler 21 may be considered as a special-purpose processor, and specifically serves the AI cores 22 and the AI CPUs 23, to implement efficient allocation and scheduling of a calculation task. The AI core 22 is a calculation core of the neural network processing unit 20, and is mainly responsible for performing a matrix operation, a vector operation, a scalar operation, and the like. The memory 25 may be a high bandwidth memory (high bandwidth memory, HBM), a double data rate synchronous dynamic random-access memory (double data rate synchronous dynamic random-access memory, DDR), or another memory. A specific type of the memory 25 is not limited in this application.

It should be noted that that the neural network processing unit 20 in FIG. 1 includes 32 AI cores and eight AI CPUs is merely used as an example for description herein. A specific quantity of AI cores and a specific quantity of AI CPUs included in the neural network processing unit 20 are not limited in this application.

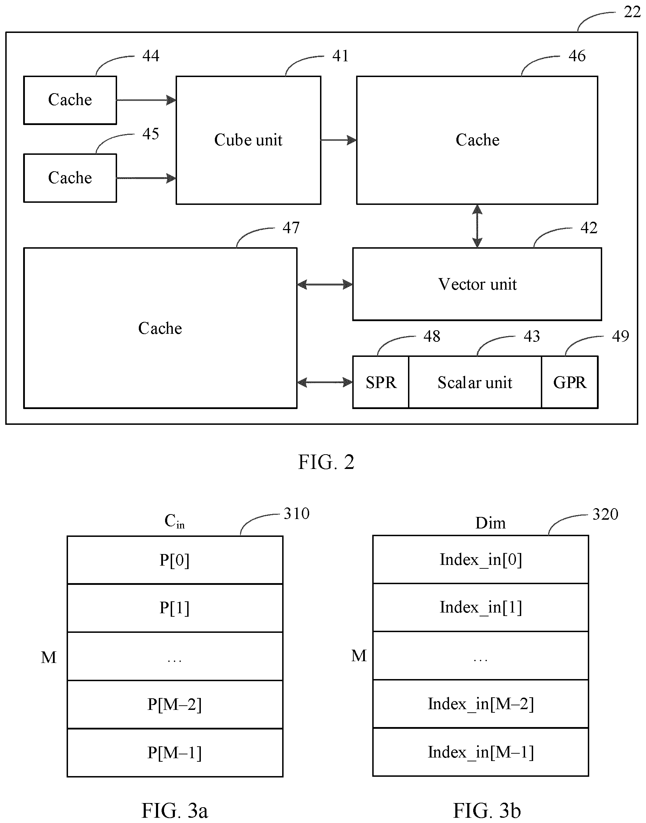

FIG. 2 is a schematic diagram of an architecture of an AI core in a neural network processing unit according to an embodiment of this application. As shown in FIG. 2, the architecture used by the AI core (AI core) 22 is a Da Vinci (Da Vinci) architecture. The architecture includes a plurality of caches and a plurality of special-purpose calculation units. Specifically, the AI core 22 includes a cube unit (cube unit) 41, a vector unit (vector unit) 42, a scalar unit (scalar unit) 43, a cache 44, a cache 45, a cache 46, a cache 47, a special-purpose register (special-purpose register, SPR) 48, and a general-purpose register (general-purpose register, GPR) 49.

The cube unit 41 is responsible for matrix calculation with a highest computing power density. For example, the cube unit may complete one dense matrix multiplication operation having a matrix size of $16 \times 16$ in one clock cycle. The cache 44 and the cache 45 are configured to store an input matrix of the cube unit 41, and the cache 46 is configured to store an output matrix of the cube unit 41. The cache 44, the cache 45, and the cache 46 may be considered as level 0 (level 0, L0) caches.

The vector unit 42 is responsible for vector calculation, and vector calculation supported by the vector unit 42 may basically cover various basic calculations in a neural network. The vector unit 42 may access the cache 46 and the cache 47, to complete reading and writing of input data and output data.

The scalar unit 43 is responsible for logic control and scalar calculation of a program. The scalar unit 43 may access the special-purpose register 48, the general-purpose register 49, and the cache 47, to complete reading and writing of related instructions and data.

It should be noted that the foregoing merely uses the Da Vinci architecture as an example to describe the architecture of the AI core. A person skilled in the art should understand that the AI core may alternatively use another architecture. A specific architecture type used by the AI core is not limited in this application. In addition, the foregoing describes only the caches and the calculation units that are included in the AI core as an example. In some examples, the AI core may further include another cache (for example, a level 1 (level 1, L1) cache), another unit or module, or the like. This is not limited in this application.

In a possible implementation, the data processing method in embodiments of this application may be implemented as an operator library. For example, it is assumed that the data processing method in embodiments of this application is used to implement sparse convolution on the neural network processing unit. In this case, the data processing method in embodiments of this application may be implemented as a sparse convolution operator library for a special-purpose calculation component of the neural network processing unit.

For example, FIG. 1, FIG. 2, and the data processing method in embodiments of this application are used to implement sparse convolution. When the data processing method in embodiments of this application is applied to the neural network processing unit 20, the data processing method may be embedded into a heterogeneous compute architecture (compute architecture for neural networks, CANN) of the neural network processing unit 20 in a form of a custom operator library, and a capability of performing a sparse convolution operation is granted to the cube unit 41 and the vector unit 42 in the AI core 22 for an upper layer to invoke. In this way, a user is supported to build an application and a service of a sparse convolution-based neural network.

In a possible implementation, an input of the data processing method in embodiments of this application may include an input feature matrix, an index matrix corresponding to the input feature matrix, and a weight matrix.

The input feature matrix may be a feature matrix obtained by processing data that is obtained by a sensor (for example, a lidar, a depth camera, or a binocular camera). For example, in a point cloud scenario, the input feature matrix may be a feature matrix obtained by performing voxelization on point cloud data that is obtained by a sensor such as a lidar. Specifically, in the point cloud scenario, a plurality of valid feature points (points whose feature values are not all 0s) are obtained by performing voxelization on the point cloud data. Each valid feature point includes at least one piece of feature data, and the input feature matrix may be generated based on feature data of the plurality of valid feature points. Each row of the input feature matrix may be considered as a feature vector of one valid feature point (that is, a vector including at least one piece of feature data of the valid feature point).

The input feature matrix may alternatively be an output result of a previous data processing task. For example, the input feature matrix may be an output matrix of previous sparse convolution or submanifold sparse convolution. It should be noted that the input feature matrix may alternatively be obtained in another manner. A manner of obtaining the input feature matrix is not limited in this application.

A size of the input feature matrix is M rows and $C_{in}$ columns (M and $C_{in}$ are positive integers), where M is a quantity of valid feature points represented by the input feature matrix, and $C_{in}$ is a quantity of features of the valid feature point represented by the input feature matrix. If each row in the input feature matrix is considered as a feature vector of one valid feature point with a dimension of $C_{in}$, the input feature matrix may be considered as a matrix including M feature vectors with a dimension of $C_{in}$.

For example, in the point cloud scenario, M is a quantity of valid feature points obtained by performing voxelization on the point cloud data, and $C_{in}$ is a quantity of features of each valid feature point. It is assumed that the quantity of valid feature points obtained by performing voxelization on the point cloud data is 7, and the quantity of features of each valid feature point is 5. In this case, a value of M is 7, a value of $C_{in}$ is 5, a size of the input feature matrix is seven rows and five columns, and each row of the input feature matrix may be considered as a feature vector of one valid feature point.

The index matrix corresponding to the input feature matrix may indicate an index location, in space, of the valid feature point represented by the input feature matrix. Each row of the index matrix corresponding to the input feature matrix stores an index location, in space, of a valid feature point represented by a corresponding row in the input feature matrix. In the point cloud scenario, the index matrix corresponding to the input feature matrix may alternatively be generated through voxelization of the point cloud data.

For example, in the point cloud scenario, the plurality of valid feature points are obtained after performing voxelization on the point cloud data, and each valid feature point has a corresponding index location in space. The index matrix corresponding to the input feature matrix may be generated based on index locations of the plurality of valid feature points in space.

The index matrix corresponding to the input feature matrix may alternatively be an output result of the previous data processing task. For example, when the input feature matrix is the output matrix of the previous sparse convolution or submanifold sparse convolution, it may be determined that an index matrix corresponding to the output matrix of the previous sparse convolution or submanifold sparse convolution is the index matrix corresponding to the input feature matrix. It should be noted that the index matrix corresponding to the input feature matrix may alternatively be obtained in another manner. A manner of obtaining the index matrix corresponding to the input feature matrix is not limited in this application.

A size of the index matrix corresponding to the input feature matrix is M rows and Dim columns (where Dim is a positive integer), where M is the quantity of valid feature points represented by the input feature matrix, and Dim is a spatial dimension of the valid feature point represented by the input feature matrix. Each row of the index matrix corresponding to the input feature matrix stores an index location, in Dim-dimensional space, of a valid feature point represented by a corresponding row in the input feature matrix.

For example, a value stored in a zeroth row of the index matrix corresponding to the input feature matrix is ($x_0$, $y_0$,

$z_0$), and indicates that an index location, in three-dimensional space, of a valid feature point represented by the zeroth row in the input feature matrix is $(x_0, y_0, z_0)$, or indicates that the zeroth row in the input feature matrix stores feature data of a valid feature point whose index location in three-dimensional space is $(x_0, y_0, z_0)$, where $x_0$, $y_0$ and $z_0$ are all integers.

The weight matrix may represent a convolution kernel/filter (filter) used in a data processing process, and may be obtained through neural network training. The weight matrix may include K matrices having a size of $C_{in}$ rows and $C_{out}$ columns (where K and $C_{out}$ are positive integers), where $C_{in}$ is the quantity of features of the valid feature point represented by the input feature matrix, $C_{out}$ is a quantity of features of an output point represented by the output matrix, and K represents a quantity of elements of the convolution kernel/filter (filter). For example, it is assumed that a size of the convolution kernel is 3×3. In this case, a quantity of elements of the convolution kernel is 9, and a value of K is 9. It is assumed that a size of the convolution kernel is 3×3×3. In this case, a quantity of elements of the convolution kernel is 27, and a value of K is 27.

FIG. 3a is a schematic diagram of an input feature matrix according to an embodiment of this application. As shown in FIG. 3a, a size of an input feature matrix 310 is M rows and $C_{in}$ columns. In other words, the input feature matrix 310 represents M valid feature points, and the M valid feature points are respectively a zeroth valid feature point, a first valid feature point, ..., and an $(M - 1)^{th}$ valid feature point.

Each row of the input feature matrix 310 may be considered as a feature vector of one valid feature point. Specifically, a zeroth row of the input feature matrix 310 may be considered as a feature vector P[0] of the zeroth valid feature point, a first row of the input feature matrix 310 may be considered as a feature vector P[1] of the first valid feature point, ..., a $(M - 2)^{th}$ row of the input feature matrix 310 may be considered as a feature vector P[M - 2] of an $(M - 2)^{th}$ valid feature point, and a $(M - 1)^{th}$ row of the input feature matrix 310 may be considered as a feature vector P[M - 1] of the $(M - 1)^{th}$ valid feature point. Dimensions of the foregoing feature vectors are all $C_{in}$.

FIG. 3b is a schematic diagram of an index matrix corresponding to an input feature matrix according to an embodiment of this application. As shown in FIG. 3b, a size of an index matrix 320 corresponding to the input feature matrix 310 in FIG. 3a is M rows and Dim columns, and each row of the index matrix 320 stores an index location, in Dim-dimensional space, of a valid feature point represented by a corresponding row in the input feature matrix.

Specifically, data Index_in[0] stored in a zeroth row of the index matrix 320 corresponding to the input feature matrix 310 represents an index location, in the Dim-dimensional space, of the valid feature point (namely, the zeroth valid feature point) represented by the zeroth row in the input feature matrix 310; data Index_in[1] stored in a first row of the index matrix 320 corresponding to the input feature matrix 310 represents an index location, in the Dim-dimensional space, of the valid feature point (namely, the first valid feature point) represented by the first row in the input feature matrix 310; ....; data Index_in[M - 2] stored in an $(M - 2)^{th}$ row of the index matrix 320 corresponding to the input feature matrix 310 represents an index location, in the Dim-dimensional space, of the valid feature point (namely, the $(M - 2)^{th}$ valid feature point) represented by the $(M - 2)^{th}$ row in the input feature matrix 310; and data Index_in[M - 1] stored in an $(M - 1)^{th}$ row of the index matrix 320 corresponding to the input feature matrix 310 represents an index location, in the Dim-dimensional space, of the valid feature point (namely, the $(M - 1)^{th}$ valid feature point) represented by the $(M - 1)^{th}$ row in the input feature matrix 310.

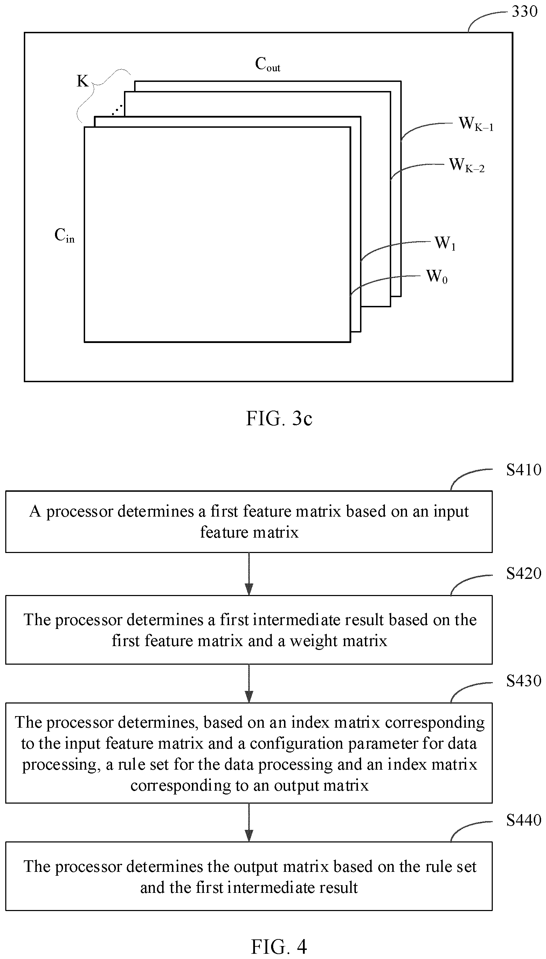

FIG. 3c is a schematic diagram of a weight matrix according to an embodiment of this application. As shown in FIG. 3c, the weight matrix 330 includes K matrices having a size of $C_{in}$ rows and $C_{out}$ columns. The matrices are sequentially a zeroth matrix $W_0$, a first matrix $W_1$, ..., a $(K - 2)^{th}$ matrix $W_{K-2}$, and a $(K - 1)^{th}$ matrix $W_{K-1}$.

FIG. 4 is a flowchart of a data processing method according to an embodiment of this application. The data processing method is applied to a processor. As shown in FIG. 4, the data processing method includes the following steps.

Step S410: The processor determines a first feature matrix based on an input feature matrix.

The processor may obtain the input feature matrix, and process the obtained input feature matrix, to obtain the first feature matrix. For example, the processor may add, to the input feature matrix, auxiliary data used to ensure correctness of a final data processing result, to obtain the first feature matrix. A size of the input feature matrix is M rows and $C_{in}$ columns, and a size of the first feature matrix is N rows and $C_{in}$ columns, where N is a positive integer, and N > M.

In a possible implementation, when determining the first feature matrix based on the input feature matrix, the processor may add (N - M) rows of auxiliary data after a last row of the input feature matrix, to obtain the first feature matrix, where at least one of the (N - M) added rows is an all-zero row (a row with all element values being 0).

For example, when (N - M) = 1, one row of auxiliary data may be added after the last row of the input feature matrix, to obtain the first feature matrix, where the added row is an all-zero row. When (N - M) = 2, two rows of auxiliary data may be added after the last row of the input feature matrix, to obtain the first feature matrix, where at least one of the two added rows is an all-zero row. In an example, both the two added rows are all-zero rows. In another example, one of the two added rows is an all-zero row, and the other is not an all-zero row. A value of an element in the other row may be a random value, or may be another preset value. This is not limited in this application. When (N - M) > 2, a processing manner of the data processing method is similar to that when (N - M) = 2. Details are not described herein again.

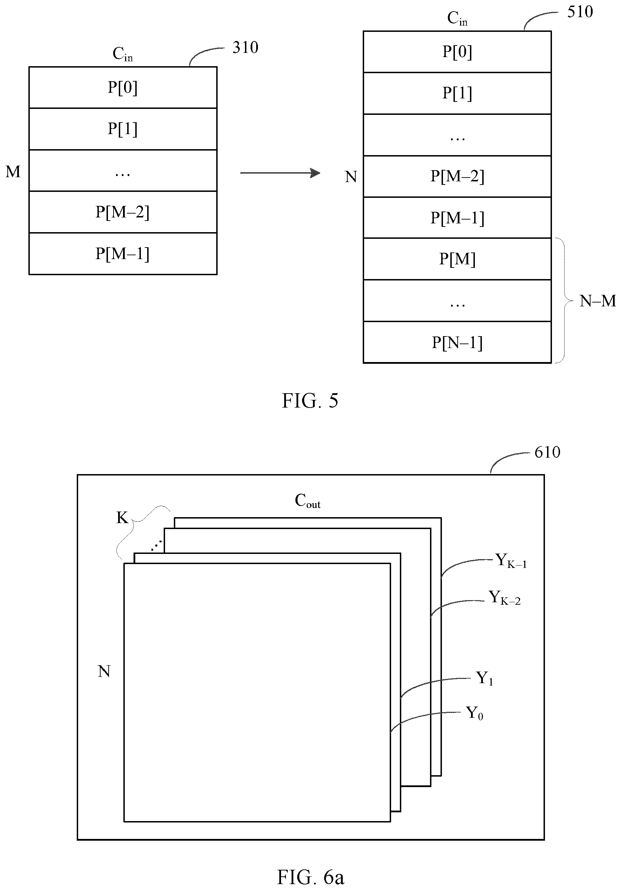

FIG. 5 is a schematic diagram of a first feature matrix according to an embodiment of this application. As shown in FIG. 5, the processor may add (N - M) rows of auxiliary data after the last row of the input feature matrix 310 having a size of

M rows and $C_{in}$ columns, to obtain a first feature matrix 510 having a size of N rows and $C_{in}$ columns, where at least one of the (N - M) added rows is an all-zero row (a row with all element values being 0). In the first feature matrix 510, each of the (N - M) added rows may also be considered as a feature vector. As shown in FIG. 5, the (N - M) added rows may be separately considered as feature vectors P[M], ..., and P[N - 1].

In a possible implementation, a location of an all-zero row in the first feature matrix may be preset. For example, the location of the all-zero row in the first feature matrix may be preset as an $M^{th}$ row. In other words, a first row in the (N - M) added rows of auxiliary data in the first feature matrix is an all-zero row.

The first feature matrix is obtained by adding the (N - M) rows of auxiliary data after the last row of the input feature matrix, where at least one of the (N - M) added rows is an all-zero row. Therefore, in a subsequent data processing process, invalid redundant data can be overwritten by a zero value in the all-zero row, to ensure the correctness of the final data processing result.

Step S420: The processor determines a first intermediate result based on the first feature matrix and a weight matrix.

The processor may further obtain the weight matrix while obtaining the input feature matrix, and may determine the first intermediate result based on the first feature matrix and the weight matrix after determining the first feature matrix in step S410. For example, matrix multiplication may be performed on the first feature matrix and the weight matrix, to obtain the first intermediate result.

In a possible implementation, the weight matrix includes K matrices having a size of $C_{in}$ rows and $C_{out}$ columns. When determining the first intermediate result based on the first feature matrix and the weight matrix, the processor may separately multiply the first feature matrix having a size of N rows and $C_{in}$ columns by the K matrices having a size of $C_{in}$ rows and $C_{out}$ columns in the weight matrix, to obtain the first intermediate result. The first intermediate result includes K second feature matrices having a size of N rows and $C_{out}$ columns.

FIG. 6a is a schematic diagram of a first intermediate result according to an embodiment of this application. As shown in FIG. 6a, the first intermediate result 610 includes K second feature matrices having a size of N rows and $C_{out}$ columns, and the second feature matrices are separately a zeroth second feature matrix $Y_0$, a first second feature matrix $Y_1$, ..., a $(K - 2)^{th}$ second feature matrix $Y_{K-2}$, and a $(K - 1)^{th}$ second feature matrix $Y_{K-1}$.

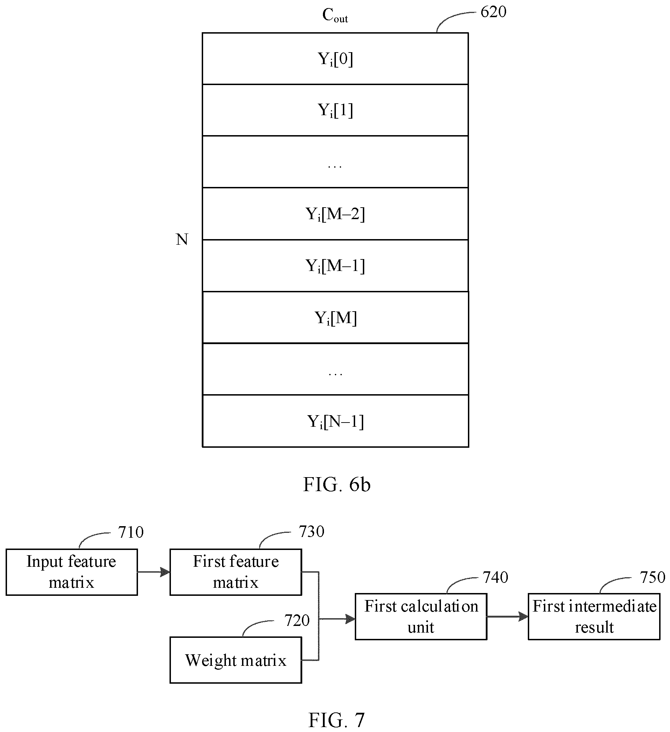

FIG. 6b is a schematic diagram of a second feature matrix in a first intermediate result according to an embodiment of this application. As shown in FIG. 6b, the second feature matrix 620 is an $i^{th}$ second feature matrix $Y_i$ in the first intermediate result, and a size of the second feature matrix 620 is N rows and $C_{out}$ columns, where 1 is an integer, and $0 \leq i \leq K - 1$. The first feature matrix may be multiplied by an $i^{th}$ matrix $W_i$ in the weight matrix, to obtain the $i^{th}$ second feature matrix $Y_i$ in the first intermediate result. In other words, the $i^{th}$ second feature matrix $Y_i$ in the first intermediate result is equal to a product of the first feature matrix and the $i^{th}$ matrix $W_i$ in the weight matrix.

Each row of the second feature matrix 620 may be considered as a feature vector. As shown in FIG. 6b, feature vectors included in the second feature matrix 620 are separately $Y_i[0]$, $Y_i[1]$, ..., $Y_i[M - 2]$, $Y_i[M - 1]$, $Y_i[M]$, ..., and $Y_i[N - 1]$, Calculation manners of the feature vectors are separately as follows:

$$Y_i[0]=P[0] \times W_i;$$

$$Y_i[1]=P[1] \times W_i;$$

$$...;$$

$$Y_i[M-2]=P[M-2] \times W_i;$$

$$Y_i[M-1]=P[M-1] \times W_i;$$

$$Y_i[M]=P[M] \times W_i;$$

$$...; \text{ and}$$

$$Y_i[N-1]=P[N-1] \times W_i.$$

P[0], P[1], ..., P[M - 2], and P[M - 1] are feature vectors from the input feature matrix in the first feature matrix, and P[M], ..., and P[N - 1] are feature vectors corresponding to the auxiliary data in the first feature matrix.

FIG. 7 is a schematic diagram of a processing process of determining a first intermediate result according to an embodiment of this application. As shown in FIG. 7, the processor first obtains an input feature matrix 710 having a size of M rows and $C_{in}$ columns, and a weight matrix (including K matrices having a size of $C_{in}$ rows and $C_{out}$ columns) 720, adds (N - M) rows of auxiliary data after a last row of the input feature matrix 710, to obtain a first feature matrix 730 having a size of N rows and $C_{in}$ columns, where at least one of the (N - M) added rows is an all-zero row. Then, the processor inputs the first feature matrix 730 and the weight matrix 720 to a first calculation unit 740 for matrix multiplication, to obtain a first intermediate result 750. The first intermediate result 750 includes K second feature matrices having a size of N rows and $C_{out}$ columns.

The first calculation unit 740 may be a unit that is in the processor and that is configured to perform a matrix multiplication operation. For example, when the processor is the neural network processing unit 20 shown in FIG. 1, the first calculation unit 740 may be the cube unit 41 in the AI core 22 shown in FIG. 2.

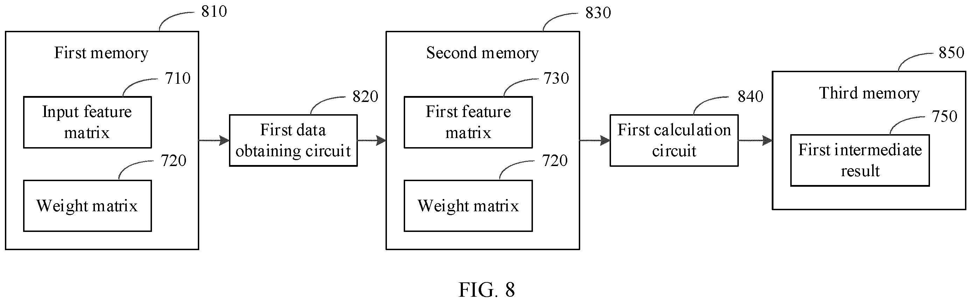

FIG. 8 is a schematic diagram of a circuit for determining a first intermediate result according to an embodiment of this application. As shown in FIG. 8, the input feature matrix 710 and the weight matrix 720 are stored in a first memory 810. The first memory 810 is a mass memory in the processor, for example, a memory (such as a DDR or an HBM) or an L2 cache in the processor.

When determining the first intermediate result, the processor may obtain, from the first memory 810 through a first data obtaining circuit 820, the input feature matrix 710 having a size of M rows and $C_{in}$ columns, add the (N - M) rows of auxiliary data after the last row of the input feature matrix 710, to obtain the first feature matrix 730 having a size of N rows and $C_{in}$ columns, and then write the first feature matrix 730 to a second memory 830, where at least one of the (N - M) added rows is an all-zero row. In addition, the processor may further obtain the weight matrix 720 from the first memory 810 through the first data obtaining circuit 820, and directly write the obtained weight matrix 720 to the second memory 830.

Because the first feature matrix 730 and the weight matrix 720 in the second memory 830 are input into a first calculation circuit 840 for calculation, the second memory 830 may be a memory closest to the first calculation circuit 840 in the processor, for example, an L0/L1 cache closest to the first calculation circuit 840 in the processor, to be specific, the cache 44 and the cache 45 shown in FIG. 2.

The first calculation circuit 840 is a circuit that is in the processor and that is configured to implement a matrix multiplication operation. For example, when the processor is the neural network processing unit 20 shown in FIG. 1, the first calculation circuit 840 may be a circuit configured to implement the cube unit 41 in the AI core 22 shown in FIG. 2.

The first calculation circuit 840 may read the first feature matrix 730 and the weight matrix 720 from the second memory 830, and perform a matrix multiplication operation on the first feature matrix 730 and the weight matrix 720. Specifically, when performing matrix multiplication, the first calculation circuit 840 may perform K times of matrix multiplication by using the first feature matrix 730 as a left matrix and using each of the K matrices having a size of $C_{in}$ rows and $C_{out}$ columns in the weight matrix 720 as a right matrix, to obtain the first intermediate result 750, and write the first intermediate result 750 into a third memory 850.

The third memory 850 may be a mass memory (for example, a DDR, an HBM, or an L2 cache) in the processor. In other words, the first calculation circuit 840 may directly write the first intermediate result 750 into the mass memory. Alternatively, the third memory 850 may be a memory that is close to the first calculation circuit 840 and that is configured to store output data of the first calculation circuit 840. In other words, the first calculation circuit 840 may store the first intermediate result 750 in a memory that is configured to store the output data of the first calculation circuit 840, for example, the cache 46 shown in FIG. 2.

It should be noted that a person skilled in the art may set specific types of the first memory 810, the second memory 830, and the third memory 850 based on an actual situation. This is not limited in this application.

The first intermediate result includes a result of multiplying each row in the first feature matrix by each matrix in the weight matrix. In data processing such as sparse convolution SC and submanifold sparse convolution SSC, it is not necessary to multiply each valid feature point by each matrix in the weight matrix. Therefore, some data in the first intermediate result is redundant data (namely, a redundant multiplication calculation result).

For example, it is assumed that the data processing is submanifold sparse convolution SSC. The first feature matrix includes nine rows in total, the first eight rows represent eight valid feature points (points whose feature values are not all 0s), and the last row is an all-zero row (that is, added auxiliary data). Locations a, b, c, d, e, f, and g of the eight valid feature points in space are shown as follows, where "-" indicates a location of an invalid feature point (point whose feature values are all 0s):

| - | - | - | - | - | - | - | - |
|---|---|---|---|---|---|---|---|
| - | - | a | b | c | d | - | - |
| - | - | - | - | - | e | - | - |
| - | - | - | - | f | - | - | - |
| - | - | - | - | g | - | - | - |
| - | - | - | h | - | - | - | - |
| - | - | - | - | - | - | - | - |

(continued)

| - | - | - | - | - | - | - | - |
|---|---|---|---|---|---|---|---|

A first second feature matrix in the first intermediate result is used as an example. Each row in the first feature matrix may be multiplied by a first matrix in the weight matrix, to obtain the first second feature matrix in the first intermediate result. However, in the submanifold sparse convolution SSC, only feature data of valid feature points corresponding to the location d and the location f needs to be multiplied by the first matrix in the weight matrix, and feature data of valid feature points at six other locations does not need to be multiplied by the first matrix in the weight matrix. Therefore, in the first second feature matrix, rows corresponding to the location d and the location e and a last row (corresponding to auxiliary data) are non-redundant data, and rows corresponding to the six other locations are all redundant data.

It should be noted that the redundant data included in the first intermediate result is described above by using only the submanifold sparse convolution SSC and the first second feature matrix in the first intermediate result as an example. Similar to the SSC, a first intermediate result of other data processing (for example, the SC) also includes redundant data. Details are not described herein again.

When the first intermediate result is determined, the first feature matrix is directly separately multiplied by the K matrices having a size of $C_{in}$ rows and $C_{out}$ columns in the weight matrix, to obtain the first intermediate result including the redundant data. According to the matrix multiplication based on redundancy calculation, dependency on a calculation rule set in a matrix multiplication process can be avoided, computing power of the processor can be fully released, and operation efficiency can be improved. In addition, scattered access of a large quantity of small data blocks brought by the calculation rule set can also be avoided, and then the data processing performance of the processor is improved.

Step S430: The processor determines, based on an index matrix corresponding to the input feature matrix and a configuration parameter for the data processing, a rule set for the data processing and an index matrix corresponding to an output matrix.

The configuration parameter for the data processing may include parameters such as a data processing type (for example, SC or SSC), a shape and a size of a convolution kernel/filter, a stride (stride) of a convolution operation, and a padding (padding). The configuration parameter for the data processing may be used as an input parameter for the data processing, or may be preset in an execution instruction for the data processing. For example, the configuration parameter for the data processing may be set in a compilation phase of a program for executing the data processing, and the configuration parameter is stored in the execution instruction for the data processing through compilation. It should be noted that a person skilled in the art may set a specific type and a value of the configuration parameter for the data processing based on an actual situation. This is not limited in this application.

In a possible implementation, the processor may determine, based on the index matrix corresponding to the input feature matrix and the configuration parameter for the data processing, a quantity L (L is a positive integer) of output points for the data processing and an index location of each output point in space by using a hash algorithm or another similar algorithm, and generate the index matrix corresponding to the output matrix based on the index location of each output point in the space. The index matrix corresponding to the output matrix may indicate the index location, in space, of each output point represented by the output matrix, and a size of the index matrix is L rows and Dim columns. Each row of the index matrix corresponding to the output matrix stores an index location, in Dim-dimensional space, of an output point represented by a corresponding row in the output matrix.

The quantity L of output points may be the same as or different from the quantity M of valid feature points represented by the input feature matrix. For example, when the data processing is SSC, the quantity L of output points for the data processing is the same as the quantity M of valid feature points represented by the input feature matrix. That is, when the data processing is SSC, L = M. When the data processing is SC, the quantity L of output points for the data processing is determined by using the hash algorithm, and may be different from M or may be the same as M. This is not limited in this application.

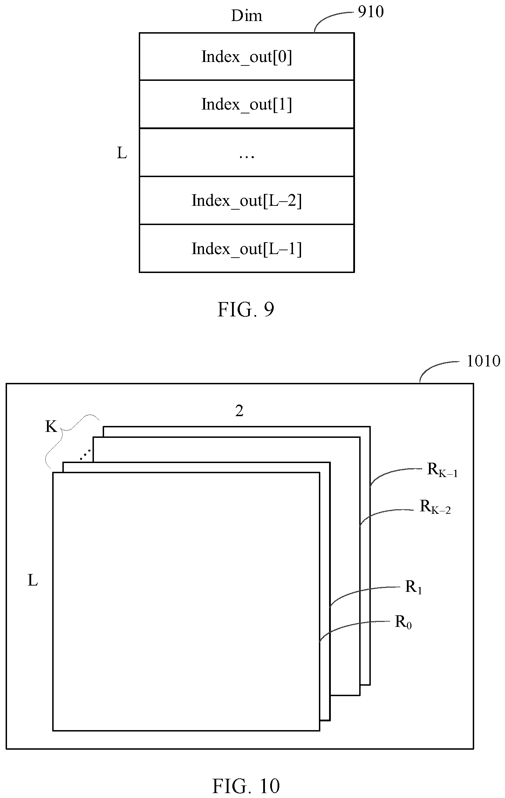

FIG. 9 is a schematic diagram of an index matrix corresponding to an output matrix according to an embodiment of this application. As shown in FIG. 9, a size of an index matrix 910 corresponding to the output matrix is L rows and Dim columns, and each row of the index matrix 910 stores an index location, in Dim-dimensional space, of an output point represented by a corresponding row in the output matrix.

Specifically, data Index_out[0] stored in a zeroth row of the index matrix 910 corresponding to the output matrix represents an index location, in the Dim-dimensional space, of an output point (that is, a zeroth output point) represented by a zeroth row in the output matrix; data Index_out[1] stored in a first row of the index matrix 910 corresponding to the output matrix represents an index location, in the Dim-dimensional space, of an output point (that is, a first output point) represented by a first row in the output matrix; ....; data Index_out[L - 2] stored in an $(L - 2)^{th}$ row of the index matrix 910 corresponding to the output matrix represents an index location, in the Dim-dimensional space, of an output point (that is, an $(L - 2)^{th}$ output point) represented by an $(L - 2)^{th}$ row in the output matrix; and data Index_out[L - 1] stored in an $(L - 1)^{th}$ row of the index matrix 910 corresponding to the output matrix represents an index location, in the Dim-dimensional space, of an output point (that is, an $(L - 2)^{th}$ output point) represented by an $(L - 2)^{th}$ row in the output matrix.

In a possible implementation, because the first intermediate result includes redundant data (that is, a redundant multiplication calculation result), to eliminate impact of the redundant data on subsequent processing, the processor may generate a rule set for data processing, to recombine the first intermediate result by using the rule set, to obtain a second intermediate result that does not include the redundant data and that is used as an input for subsequent addition calculation. That is, the rule set for the data processing is a set of rules used when the processor recombines the first intermediate result to obtain the second intermediate result. The rule in the rule set may indicate a correspondence between a first location in the second intermediate result and a second location in the first intermediate result, and a meaning of the correspondence is that data of the first location in the second intermediate result comes from the second location in the first intermediate result.

The first intermediate result includes K second feature matrices having a size of N rows and $C_{out}$ columns. The second intermediate result corresponds to the output points for the data processing. The second intermediate result includes K third feature matrices having a size of L rows and $C_{out}$ columns, and each row in the third feature matrix corresponds to one output point. An arrangement order of L rows in each third feature matrix and an arrangement order of L rows in the index matrix corresponding to the output matrix are: The rows are sorted based on an identity (identity, ID) of an output point corresponding to each row. The ID of the output point can be used to uniquely identify the output point. In an example, the ID of the output point may be determined based on an index location of the output point. In another example, a number may be set for the output point, and the number of the output point is determined as the ID of the output point. A manner of determining the ID of the output point is not limited in this application.

In a possible implementation, the processor may establish the rule set for the data processing based on the quantity of output points, the index matrix corresponding to the input feature matrix, and the configuration parameter for the data processing by using the hash algorithm or another similar algorithm. For example, when the data processing is SSC, the processor may establish a rule set for the SSC based on the quantity of output points, the index matrix corresponding to the input feature matrix, and a configuration parameter for the SSC by using the hash algorithm.

In a process of establishing the rule set for the data processing, the processor may determine, based on the quantity L of output points and the configuration parameter for the data processing, the quantity of rules included in the rule set: The quantity of rules included in the rule set is equal to a product of the quantity L of output points and a quantity K of elements of a convolution kernel/filter (filter) during the data processing. That is, the rule set for the data processing includes $K \times L$ rules.

In a possible implementation, the rule set may be represented and stored in a plurality of data formats such as a matrix and a key-value pair. For example, the rule set may be represented and stored by using a matrix. Corresponding to the second intermediate result, the rule set may be represented as K rule matrices, and each rule matrix includes L rows. That is, each rule matrix represents L rules, and each rule matrix includes at least one column. In an example, a size of the rule matrix is L rows and 2 columns. For example, each rule matrix includes two columns: a zeroth column and a first column, where the zeroth column represents a first location, and the second column represents a second location. In another example, the rule matrix may include a plurality of columns. In this example, in addition to the two columns representing the first location and the second location, the rule matrix may further include a column representing other information related to the rule set or the rule.

In a possible implementation, the L rows of each rule matrix may be arranged in ascending order of the first locations, so that the first location in each rule matrix is consecutive, and then continuity of a subsequent data writing location is ensured. In this manner, in a subsequent process of recombining the first intermediate result to generate the second intermediate result, the second intermediate result can be written to a memory by using a sequential write operation, so that a random write operation is avoided. Therefore, data access efficiency can be improved, and then the data processing performance of the processor can be improved.

In a possible implementation, when the L rows of each rule matrix are arranged in ascending order of the first locations, the size of the rule matrix may be compressed into L rows and 1 column. That is, the rule matrix does not include the first location, but includes only the second location, and the first location is determined based on a row offset of the rule matrix. Therefore, storage space of the rule set may be compressed, the rule set is represented and stored as K regular matrices having a size of L rows and 1 column. In this way, the storage space can be saved.

It should be noted that a person skilled in the art may set a specific quantity of columns of the rule matrix based on an actual situation. This is not limited in this application.

In a possible implementation, when the rule set is established by using the hash algorithm, for a rule represented by a $j^{th}$ row in an $i^{th}$ rule matrix, i is an integer and $0 \le i \le K - 1$, and j is an integer and $0 \le j \le L - 1$. When the rule is established, a first location indicated by the rule in an $i^{th}$ third feature matrix in the second intermediate result is first determined. For example, it is assumed that the first location is a $j^{th}$ row in the $i^{th}$ third feature matrix in the second intermediate result, the $j^{th}$ row and a zeroth column (the first location) in the $i^{th}$ rule matrix may be set to j. Then, whether the first location is used as an output location of a multiplication operation on an $i^{th}$ element of the convolution kernel is determined based on the index matrix corresponding to the input feature matrix and the configuration parameter for the data processing. If the first location is used as the output location of the multiplication operation on the $i^{th}$ element of the convolution kernel, a second location of data that needs to be output to the first location is determined in an $i^{th}$ second feature matrix in the first intermediate result, and the $j^{th}$ row and a first column in the $i^{th}$ rule matrix are set based on the second location, to obtain the rule represented by the $j^{th}$ row in the $i^{th}$ rule matrix. In this manner, non-redundant data can be selected from the first intermediate result, and an output location (that is, the first location) of the non-redundant data can be determined.

If the first location is not used as the output location of the multiplication operation on the $i^{th}$ element of the convolution kernel, the $j^{th}$ row and the first column (the second location) in the $i^{th}$ rule matrix are set to a preset value, where the preset value is a row number of an all-zero row in each second feature matrix in the first intermediate result, to obtain the rule represented by the $j^{th}$ row in the $i^{th}$ rule matrix. For example, it is assumed that a first row in the (N - M) added rows after the last row of the input feature matrix is an all-zero row, an $M^{th}$ row in each second feature matrix in the first intermediate result is an all-zero row, and the preset value may be set to M. That is, the preset value is set to a quantity of rows M of the input feature matrix. In this manner, redundant data caused by matrix multiplication in the first intermediate result can be eliminated, thereby ensuring correctness of a data processing result.

For example, it is assumed that the data processing is submanifold sparse convolution SSC, a size of the convolution kernel is $3\times3$, and the convolution kernel includes nine elements (a zeroth element, a first element, ..., and an eighth element respectively). The input feature matrix has eight rows (a zeroth row to a seventh row) that indicate eight valid feature points (points whose feature values are not all 0s). Locations a, b, c, d, e, f, and g of the eight valid feature points in space are shown as follows, where "-" indicates a location of an invalid feature point (point whose feature values are all 0s):

| - | - | - | - | - | - | - | - |
|---|---|---|---|---|---|---|---|
| - | - | a | b | c | d | - | - |
| - | - | - | - | - | e | - | - |
| - | - | - | - | f | - | - | - |
| - | - | - | - | g | - | - | - |
| - | - | - | h | - | - | - | - |
| - | - | - | - | - | - | - | - |
| - | - | - | - | - | - | - | - |

A quantity and locations of output points of the submanifold sparse convolution SSC are respectively the same as the quantity and locations of valid feature points represented by the input feature matrix. Therefore, in this example, the quantity L of output points of the submanifold sparse convolution SSC is also eight, and the locations of the output points in space are also the locations a, b, c, d, e, f, and g respectively.

It is assumed that the row number of the all-zero row in each second feature matrix in the first intermediate result is eight, and it is assumed that in each third feature matrix in the second intermediate result, a zeroth row corresponds to the output point at the location a, a first row corresponds to the output point at the location b, a second row corresponds to the output point at the location c, ..., and a seventh row corresponds to the output point at the location g.

The rule set for the submanifold sparse convolution SSC may be represented as nine rule matrices having a size of eight rows and two columns. The rule matrices are respectively a zeroth rule matrix, a first rule matrix, a second rule matrix, ..., and an eighth rule matrix. The following uses two rules as examples to illustrate a process of establishing each rule in the rule set for the submanifold sparse convolution SSC.

Example 1: A rule represented by a third row in the first rule matrix

For a rule represented by a third row in the first rule matrix, when the rule is established, it is assumed that a first location in the rule represented by the third row in the first rule matrix is a third row in a first third feature matrix in the second intermediate result, the third row and a zeroth column (the first location) in the first rule matrix may be set to 3. Then, whether the third row in the first third feature matrix is used as an output location of a multiplication operation on a first element of the convolution kernel is determined based on the index matrix corresponding to the input feature matrix and the configuration parameter for the submanifold sparse convolution SSC. The third row in the first third feature matrix corresponds to the output point at the location d, and the output point at the location d is not used as an output of the multiplication operation on the first element of the convolution kernel. Therefore, the third row in the first third feature matrix is not used as the output location of the multiplication operation on the first element of the convolution kernel. In this case, the third row and a first column (the second location) in the first rule matrix may be set to a preset value 8 (that is, the row number of the all-zero row in each second feature matrix in the first intermediate result), to obtain the rule represented by the third row in the first rule matrix.

A meaning of the rule represented by the third row in the first rule matrix is: Data in the third row of the first third feature matrix in the second intermediate result comes from an eighth row of a first second feature matrix in the first intermediate result.

Example 2: A rule represented by a fourth row in the first rule matrix

For a rule represented by a fourth row in the first rule matrix, when the rule is established, it is assumed that a first location in the rule represented by the fourth row in the first rule matrix is a fourth row in a first third feature matrix in the second intermediate result, the fourth row and a zeroth column (the first location) in the first rule matrix may be set to 4. Then, whether the fourth row in the first third feature matrix is used as an output location of a multiplication operation on a first element of the convolution kernel is determined based on the index matrix corresponding to the input feature matrix and the configuration parameter for the submanifold sparse convolution SSC. The fourth row in the first third feature matrix corresponds to the output point at the location e, and the output point at the location e is used as an output of data at the location d in the multiplication operation on the first element of the convolution kernel. Therefore, the fourth row in the first third feature matrix is used as the output location of the multiplication operation on the first element of the convolution kernel. Then, a row number 3 of a third row that is in a first second feature matrix in the first intermediate result and that corresponds to the location d is determined as a second location of data that needs to be output to the first location, and the fourth row and a first column (the second location) in the first rule matrix is set to 3, to obtain the rule represented by the fourth row in the first rule matrix.

A meaning of the rule represented by the fourth row in the first rule matrix is: Data in the fourth row of the first third feature matrix in the second intermediate result comes from a third row of the first second feature matrix in the first intermediate result.

It should be noted that only two rules in the rule set for the submanifold sparse convolution SSC are used as examples to illustrate the process of establishing the rule set for the data processing. A process of establishing a rule set for other data processing (for example, SC) is similar to that in the foregoing embodiment. Details are not described herein again.

In a possible implementation, each third feature matrix in the second intermediate result may or may not include an all-zero row. A person skilled in the art may perform setting based on an actual situation. This is not limited in this application. When each third feature matrix in the second intermediate result includes an all-zero row, a corresponding rule may be established in the rule set. An establishment manner of the rule is similar to that in the foregoing embodiment. Details are not described herein again.

FIG. 10 is a schematic diagram of a rule set for data processing according to an embodiment of this application. As shown in FIG. 10, a rule set 1010 for data processing is represented as K rule matrices having a size of L rows and 2 columns. The rule matrices are respectively a zeroth rule matrix $R_0$, a first rule matrix $R_1$, ..., a $(K-2)^{th}$ rule matrix $R_{K-2}$, and a $(K-1)^{th}$ rule matrix $R_{K-1}$.

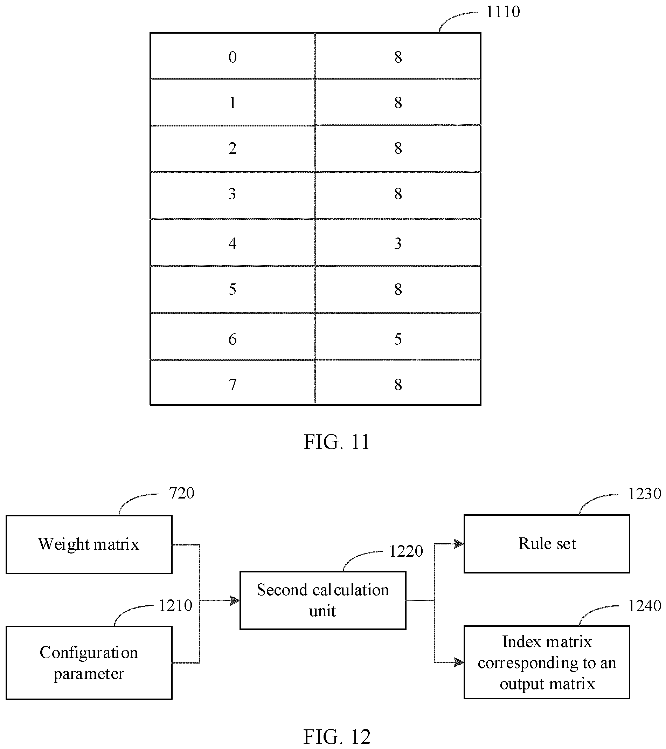

FIG. 11 is a schematic diagram of a rule matrix according to an embodiment of this application. As shown in FIG. 11, a size of a rule matrix 1110 is eight rows and two columns, where a zeroth column represents a first location, and a first column represents a second location. The eight rows of the rule matrix 1110 are arranged in ascending order of the first locations. In some other examples, the eight rows of the rule matrix 1110 may be arranged in another order, or may be arranged in a random order. This is not limited in this application.

It is assumed that the rule matrix 1110 is a first rule matrix, a meaning of a rule represented by a zeroth row of the rule matrix 1110 is: Data in a zeroth row of a first third feature matrix in a second intermediate result comes from an eighth row of a first second feature matrix in a first intermediate result. A first row, a second row, a third row, a fifth row, and a seventh row of the rule matrix 1110 are similar to the zeroth row. A meaning of a rule represented by a fourth row of the rule matrix 1110 is: Data in a fourth row of the first third feature matrix in the second intermediate result comes from a third row of the first second feature matrix in the first intermediate result. A meaning of a rule represented by a sixth row of the rule matrix 1020 is: Data in a sixth row of the first third feature matrix in the second intermediate result comes from a fifth row of the first second feature matrix in the first intermediate result.

It should be noted that the foregoing only uses the rule matrix having a size of L rows and 2 columns shown in FIG. 11 as an example to illustrate the rule matrix. During actual application, the size of the rule matrix may alternatively be L rows and 1 column or L rows and a plurality of columns. This is not limited in this application.

FIG. 12 is a schematic diagram of a processing process of determining a rule set for data processing and an index matrix corresponding to an output matrix according to an embodiment of this application. As shown in FIG. 12, the processor may obtain the weight matrix (including the K matrices having a size of $C_{in}$ rows and $C_{out}$ columns) 720 and a configuration parameter 1210 for data processing, and input the weight matrix 720 and the configuration parameter 1210 for the data processing into a second calculation unit 1220 for processing, to obtain a rule set 1230 for the data processing and an index matrix 1240 corresponding to the output matrix.

The second calculation unit 1220 may be a unit that is in the processor and that is configured to perform general-purpose calculation. For example, when the processor is the neural network processing unit 20 shown in FIG. 1, the second calculation unit 1220 may be the AI CPU 23 shown in FIG. 1. The rule set 1230 for the data processing may be represented as K rule matrices having a size of L rows and 2 columns. A size of the index matrix 1240 corresponding to the output matrix is L rows and Dim columns.

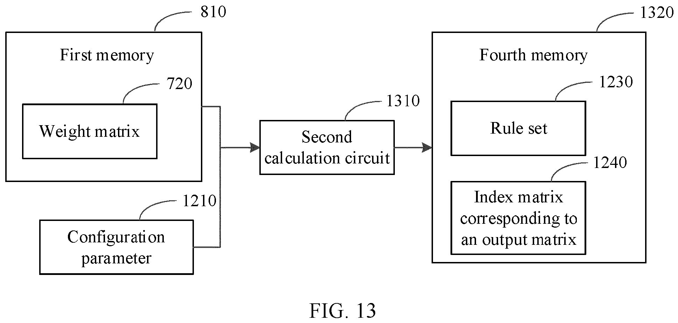

FIG. 13 is a schematic diagram of a circuit for determining a rule set for data processing and an index matrix corresponding to an output matrix according to an embodiment of this application. As shown in FIG. 13, the weight matrix 720 is stored in the first memory 810. The first memory 810 is a mass memory in the processor, for example, a memory (such as a DDR or an HBM) in the processor or an L2 cache. The configuration parameter 1210 for the data processing is preset in an execution instruction for the data processing.

The processor may obtain the weight matrix 720 from the first memory 810 by using a second calculation circuit 1310, obtain the configuration parameter 1210 for the data processing from the execution instruction for the data processing, process the weight matrix 720 and the configuration parameter 1210 for the data processing in the manner described in the foregoing embodiment, to obtain the rule set 1230 for the data processing and the index matrix 1240 corresponding to the output matrix, and write the rule set 1230 for the data processing and the index matrix 1240 corresponding to the output matrix to a fourth memory 1320.

The second calculation circuit 1310 is a circuit that is in the processor and that is configured to implement a general-purpose operation. For example, when the processor is the neural network processing unit 20 shown in FIG. 1, the second calculation circuit 1310 may be a circuit configured to implement the AI CPU 23 shown in FIG. 1.

The fourth memory 1320 may be a mass memory (for example, a DDR, an HBM, or an L2 cache) in the processor. That is, the second calculation circuit 1310 may directly write the rule set 1230 for the data processing and the index matrix 1240 corresponding to the output matrix to the mass memory. A person skilled in the art may set a specific type of the fourth memory 1320 based on an actual situation. This is not limited in this application.

In a possible implementation, step S430 may be executed simultaneously with steps S410 and S420 (that is, parallel execution). For example, when the processor is an NPU, steps S410 and S420 may be executed by using a cube unit in an AI core, and step S430 may be executed by using an AI CPU. In this manner, processing efficiency can be improved. Steps S410, S420, and S430 may also be executed sequentially, or step S430 may be executed first, and then steps S410 and S420 are executed. A person skilled in the art may set an execution manner (parallel execution or sequential execution) and an execution sequence of steps S410, S420, and S430 based on an actual situation. This is not limited in this application.

Step S440: The processor determines the output matrix based on the rule set and the first intermediate result.

When determining the output matrix based on the rule set and the first intermediate result, the processor may first recombine the first intermediate result based on the rule set to obtain the second intermediate result, and then determine the output matrix based on the second intermediate result.

In a possible implementation, when recombining the first intermediate result, the processor may sequentially read the rules in the rule set, then read data from the first intermediate result based on a second location that is indicated by each rule and that is in the first intermediate result, and write the read data onto a first location that is indicated by each rule and that is in the second intermediate result, to obtain the second intermediate result. For example, for any rule in the rule set, the processor may consider a second location in the rule as a source address (src_addr) of data, consider a first location in the rule as a destination address (destination address, dst_addr) of the data, then read the data from the second location in the first intermediate result, and write the data onto the first location in the second intermediate result.

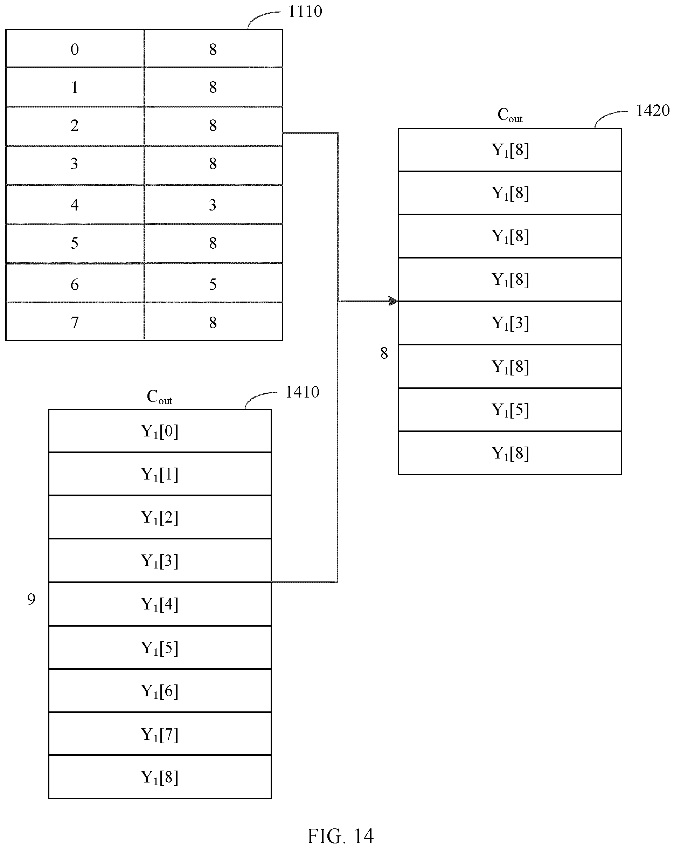

FIG. 14 is a schematic diagram of recombining a first intermediate result according to an embodiment of this application. As shown in FIG. 14, it is assumed that the rule matrix 1110 is the first rule matrix in the rule set, and there are eight rows (which are respectively a zeroth row, a first row, ..., and a seventh row) in total, indicating eight rules. A second feature matrix 1410 is the first second feature matrix in the first intermediate result, and a size of the second feature matrix 1410 is nine rows and $C_{out}$ columns, including a zeroth row, a first row, ..., an eighth row, and a ninth row, where the eighth row (that is, the last row) is an all-zero row.

The processor may read data (a feature vector $Y_1[8]$) from the eighth row of the second feature matrix 1410 based on the zeroth row of the rule matrix 1110, and write the data to a zeroth row of a third feature matrix 1420. The processor may read data (a feature vector $Y_1[8]$) from the eighth row of the second feature matrix 1410 based on the first row of the rule matrix 1110, and write the data to a first row of the third feature matrix 1420. The processor may read data (a feature vector $Y_1[8]$) from the eighth row of the second feature matrix 1410 based on the second row of the rule matrix 1110, and write the data to a second row of the third feature matrix 1420. The processor may read data (a feature vector $Y_1[8]$) from the eighth row of the second feature matrix 1410 based on the third row of the rule matrix 1110, and write the data to a third row of the third feature matrix 1420. The processor may read data (a feature vector $Y_1[3]$) from the third row of the second feature matrix 1410 based on the fourth row of the rule matrix 1110, and write the data to a fourth row of the third feature matrix 1420. The processor may read data (a feature vector $Y_1[8]$) from the eighth row of the second feature matrix 1410 based on the fifth row of the rule matrix 1110, and write the data to a fifth row of the third feature matrix 1420. The processor may read data (a feature vector $Y_1[5]$) from the fifth row of the second feature matrix 1410 based on the sixth row of the rule matrix 1110, and write the data to a sixth row of the third feature matrix 1420. The processor may read data (a feature vector $Y_1[8]$) from the eighth row of the second feature matrix 1410 based on the seventh row of the rule matrix 1110, and write the data to a seventh row of the third feature matrix 1420. Therefore, the third feature matrix 1420 is obtained. The third feature matrix 1420 is the first third feature matrix in the second intermediate result, and a size of the third feature matrix 1420 is eight rows and $C_{out}$ columns.

It may be learned from the embodiment shown in FIG. 14 that, in a process of recombining the first intermediate result to obtain the second intermediate result, some rows in the second feature matrix may be read once or more times, and some rows may not be read.

It may be further learned from the embodiment shown in FIG. 14 that the eight rows of the rule matrix are arranged in ascending order of the first locations. When the processor writes data to the third feature matrix, a write operation of the processor is sequential write instead of random write. In this manner, data access efficiency can be improved.

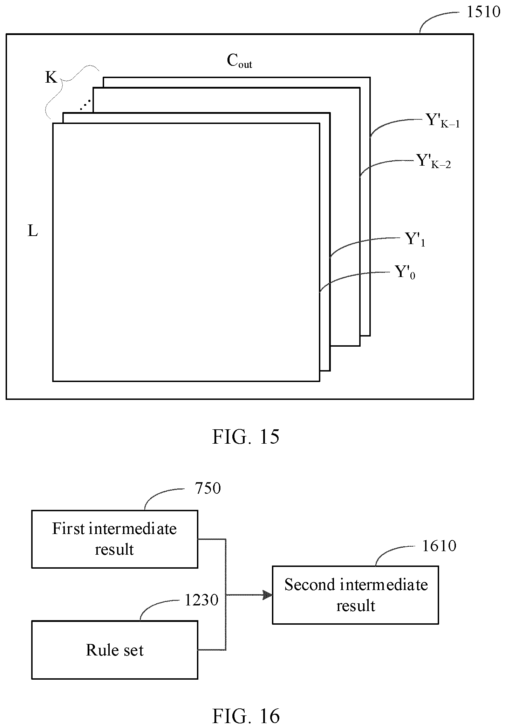

FIG. 15 is a schematic diagram of a second intermediate result according to an embodiment of this application. As shown in FIG. 15, a second intermediate result 1510 includes K third feature matrices having a size of L rows and $C_{out}$ columns, and the third feature matrices are respectively a zeroth third feature matrix $Y_0'$, a first third feature matrix $Y_1'$, ..., a (K - 2)th third feature matrix $Y_{K-2}'$, and a (K - 1)th third feature matrix $Y_{K-1}'$. Each third feature matrix in the second intermediate result may be obtained in a manner similar to that in the embodiment shown in FIG. 14. Details are not described herein again.

FIG. 16 is a schematic diagram of a processing process of recombining a first intermediate result according to an embodiment of this application. As shown in FIG. 16, the processor may obtain the first intermediate result 750 and the rule set 1230 that are determined in the foregoing embodiments, and recombine the first intermediate result 750 based on the rule set 1230, to obtain a second intermediate result 1610. The second intermediate result 1610 includes K third feature matrices having a size of L rows and $C_{out}$ columns.

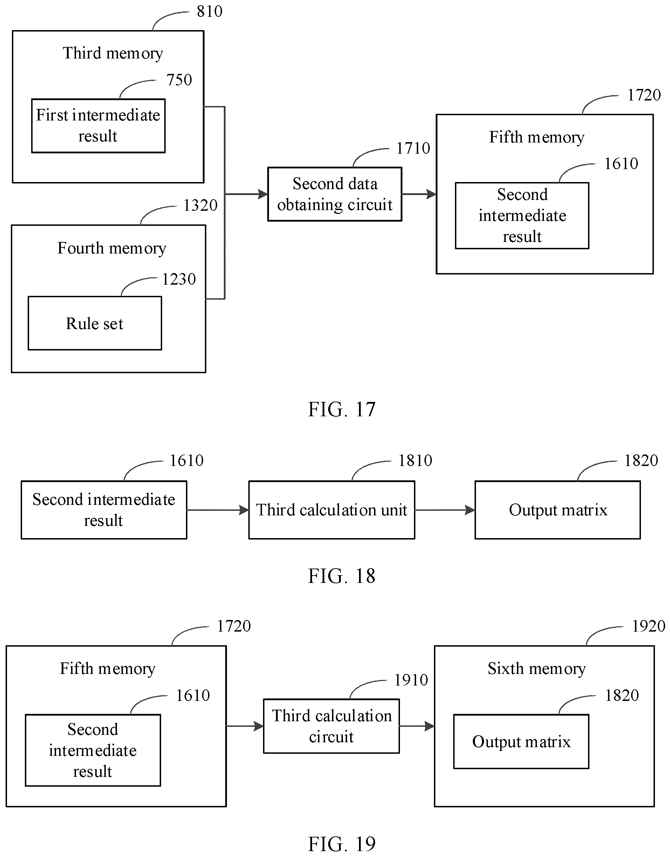

FIG. 17 is a schematic diagram of a circuit for recombining a first intermediate result according to an embodiment of this application. As shown in FIG. 17, the first intermediate result 750 is stored in the third memory 810, and the rule set 1230 is stored in the fourth memory 1320. When recombining the first intermediate result 750, the processor may read the first intermediate result 750 from the third memory 810 and read the rule set 1230 from the fourth memory 1320 by using a second data obtaining circuit 1710, recombine the first intermediate result 750 based on the rule set 1230 to obtain the second intermediate result 1610, and then write the second intermediate result 1610 to a fifth memory 1720.

The fifth memory 1720 may be a mass memory (for example, a DDR, an HBM, or an L2 cache) in the processor. That is, the second data obtaining circuit 1710 may directly write the second intermediate result 1610 to the mass memory. Alternatively, the fifth memory 1720 may be a cache that is close to a subsequent calculation unit, for example, the cache 47 shown in FIG. 2. That is, the second data obtaining circuit 1710 may store the second intermediate result 1720 into the cache that is close to the subsequent calculation unit, to facilitate subsequent calculation.

Each row of data in each third feature matrix in the second intermediate result 1610 is read from the first intermediate result 750 based on the rule set 1230. A process is as follows:

The second data obtaining circuit 1710 sequentially reads each rule in the rule set 1230, for example, each row in the K rule matrices. For a rule represented by a $j^{th}$ row in an $i^{th}$ rule matrix, a meaning of the rule is: Data at a first location in an $i^{th}$ rule matrix in the second intermediate result comes from a second location in an $i^{th}$ rule matrix in the first intermediate result. When reading the rule, the second data obtaining circuit 1710 reads data from the second location in the $i^{th}$ rule matrix in the first intermediate result, and writes the data onto the first location in the $i^{th}$ rule matrix in the second intermediate result.

In this manner, the processor can recombine the first intermediate result including the redundant data, to obtain the second intermediate result that does not include the redundant data, so that redundant data caused by matrix multiplication in the data processing process can be eliminated, and correctness of subsequent data processing can be ensured.

In a possible implementation, the second intermediate result may be considered as a multiplication operation result of K elements (represented by a weight matrix) of a convolution kernel and an input valid feature point (represented by an input feature matrix). According to definitions of data processing such as sparse convolution SC or submanifold sparse convolution SSC, an addition operation needs to be performed after the multiplication operation is completed, to obtain a data processing result. Therefore, after obtaining the second intermediate result, the processor may determine the output matrix based on the second intermediate result. The second intermediate result includes K third feature matrices having a size of L rows and $C_{out}$ columns, and a size of the output matrix is L rows and $C_{out}$ columns. In an example, the processor may add the K third feature matrices having a size of L rows and $C_{out}$ columns in the second intermediate result, to obtain the output matrix. In another example, the processor may perform, by using a reduction summation instruction, for example, a reduce_sum instruction, reduction summation on the second intermediate result in a K direction, to obtain the output matrix.

FIG. 18 is a schematic diagram of a processing process of determining an output matrix according to an embodiment of this application. As shown in FIG. 18, after obtaining the second intermediate result 1610, the processor may input the second intermediate result 1610 into a third calculation unit 1810, and the third calculation unit 1810 adds the K third feature matrices in the second intermediate result 1610, to obtain an output matrix 1820.

The third calculation unit 1810 may be a unit that is in the processor and that is configured to perform vector calculation. For example, when the processor is the neural network processing unit 20 shown in FIG. 1, the third calculation unit 1810 may be the vector unit 42 in the AI core 22 shown in FIG. 2.

FIG. 19 is a schematic diagram of a circuit for determining an output matrix according to an embodiment of this application. As shown in FIG. 19, the second intermediate result 1610 is stored in the fifth memory 1720. When determining the output matrix based on the second intermediate result 1610, the processor may read the second intermediate result 1610 from the fifth memory 1720 by using a third calculation circuit 1910, add the K third feature matrices in the second intermediate result 1610 to obtain the output matrix 1820, and then write the output matrix 1820 to a sixth memory 1920.

The sixth memory 1920 may be a mass memory (for example, a DDR, an HBM, or an L2 cache) in the processor. That is, the third calculation circuit 1910 may directly write the output matrix 1820 to the mass memory. The sixth memory 1920 may be the same as or different from the fourth memory 1320 in FIG. 13. This is not limited in this application. A person skilled in the art may set a specific type of the sixth memory 1920 based on an actual situation. This is not limited in this application.

In this manner, the output matrix can be quickly and accurately obtained based on the second intermediate result, so that data processing efficiency can be improved.

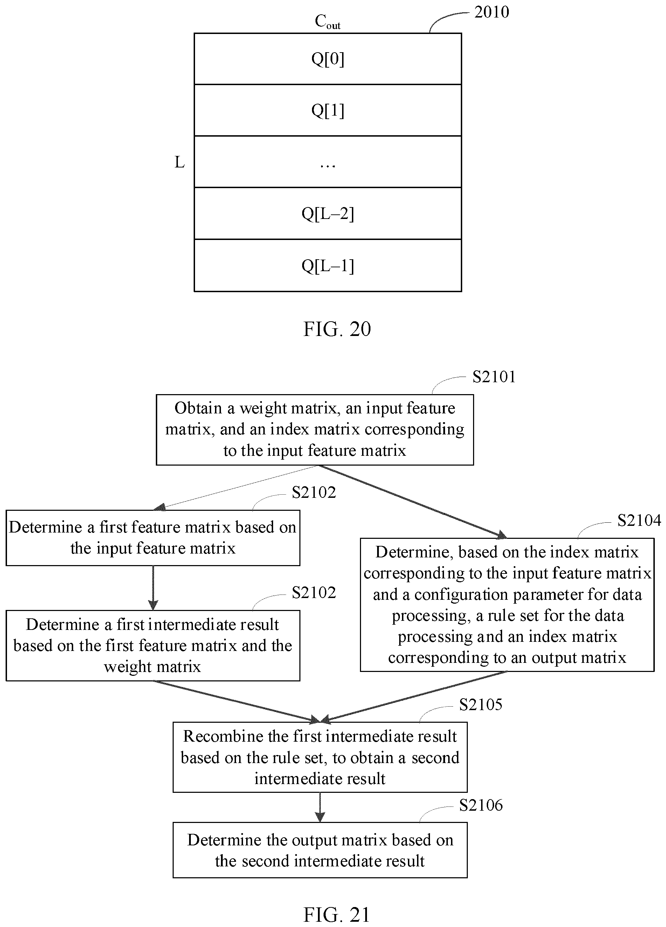

FIG. 20 is a schematic diagram of an output matrix according to an embodiment of this application. As shown in FIG. 20, a size of an output matrix 2010 is L rows and $C_{out}$ columns, where L is a quantity of output points represented by the output matrix, and $C_{out}$ is a quantity of features of the output points represented by the output matrix. That is, the output matrix 2010 represents L output points that are respectively a zeroth output point, a first output point, ..., an $(L - 2)^{th}$ output point, and an $(L - 1)^{th}$ output point.

Each row of the output matrix 2010 may be considered as a feature vector of one output point. Specifically, a zeroth row of the output matrix 2010 may be considered as a feature vector Q[0] of the zeroth output point, a first row of the output matrix 2010 may be considered as a feature vector Q[1] of the first output point, ..., an $(L - 2)^{th}$ row of the output matrix 2010 may be considered as feature vector Q[L - 2] of the $(L - 2)^{th}$ output point, and an $(L - 1)^{th}$ row of the output matrix 2010 may be considered as feature vector Q[L - 1] of the $(L - 1)^{th}$ output point.

An index matrix corresponding to the output matrix 2010 is the index matrix 910 shown in FIG. 9. A size of the index matrix 910 corresponding to the output matrix 2010 is L rows and Dim columns, and each row of the index matrix 910 stores an index location, in Dim-dimensional space, of an output point represented by a corresponding row in the output matrix 2010.

For example, when a value of Index_out[1] stored in a first row in the index matrix 910 corresponding to the output matrix 2010 is $(x_1, y_1, z_1)$, it indicates that an index location, in three-dimensional space, of an output point represented by the first row in the output matrix 2010 is $(x_1, y_1, z_1)$, where $x_1$, $y_1$, and $z_1$ are all integers.

In a possible implementation, an output of the data processing method in embodiments of this application may include an output matrix (as shown in FIG. 20) and an index matrix (as shown in FIG. 9) corresponding to the output matrix. In an example, the output (that is, the output matrix and the index matrix corresponding to the output matrix) of the data processing method in embodiments of this application may be used to identify a type, a distance, a posture, and the like of an object. For example, in a point cloud scenario, the output matrix and the index matrix corresponding to the output matrix that are obtained by using the data processing method in embodiments of this application may be used to identify point cloud data, to obtain information such as a type, a distance, and a posture of a surrounding object. In another example, the output (that is, the output matrix and the index matrix corresponding to the output matrix) of the data processing method in embodiments of this application may be used as an input of subsequent data processing (for example, SC or SSC).

A processing process of the data processing method in embodiments of this application is illustrated by using an example below with reference to a specific application example and FIG. 21.

It is assumed that the data processing is submanifold sparse convolution SSC, a quantity of input valid feature points is eight (that is, M = 8), and a quantity of features of each valid feature point is $C_{in}$. In this case, a size of an input feature matrix is eight rows and $C_{in}$ columns, and a size of an index matrix corresponding to the input feature matrix is eight rows and Dim columns. A convolution kernel/filter (filter) of the submanifold sparse convolution SSC includes nine elements (that is, K = 9), and a corresponding weight matrix includes nine matrices having a size of $C_{in}$ rows and $C_{out}$ columns. A configuration parameter for the submanifold sparse convolution SSC is preset in an execution instruction of the submanifold sparse convolution SSC.

FIG. 21 is a schematic diagram of a processing process of a data processing method according to an embodiment of this application. The method is performed by a processor, and a specific process in which the processor performs data processing is as follows:

Step S2101 is performed to obtain a weight matrix, an input feature matrix, and an index matrix corresponding to the input feature matrix.

Step S2102 is performed to determine a first feature matrix based on the input feature matrix. After a last row of the input feature matrix, a row of auxiliary data whose values are all 0s may be added (that is, an all-zero row may be added), to obtain the first feature matrix, where a size of the first feature matrix is nine rows and $C_{in}$ columns (that is, N = 9).

Step S2103 is performed to determine a first intermediate result based on the first feature matrix and the weight matrix. The first feature matrix is separately multiplied by each of the nine matrices having a size of $C_{in}$ rows and $C_{out}$ columns in the weight matrix, to obtain the first intermediate result, where the first intermediate result includes nine second feature matrices having a size of 9 rows and $C_{out}$ columns.

When step S2102 and step S2103 are performed, the processor may further perform step S2104 to determine, based on the index matrix corresponding to the input feature matrix and a configuration parameter for the data processing (that is, the submanifold sparse convolution SSC) by using a hash algorithm or another similar algorithm, a rule set for the data processing (that is, the submanifold sparse convolution SSC) and an index matrix corresponding to an output matrix, where a size of the index matrix corresponding to the output matrix is eight rows and Dim columns (that is, L = 8).

Step S2105 is performed to recombine the first intermediate result based on the rule set for the SSC, to obtain a second intermediate result, where the second intermediate result includes nine third feature matrices having a size of 8 rows and $C_{out}$ columns.

Step S2106 is performed to determine the output matrix based on the second intermediate result. The output matrix is obtained by adding the nine third feature matrices having a size of 8 rows and $C_{out}$ columns in the second intermediate result, where a size of the output matrix is 8 rows and $C_{out}$ columns.

The foregoing only uses the submanifold sparse convolution SSC as an example to illustrate the processing process of the data processing method in this embodiment of this application. A processing process of other data processing (for example, sparse convolution SC) is similar to that in the foregoing embodiment. Details are not described herein again.

According to the data processing method in this embodiment of this application, a matrix operation can be directly performed in a data processing process such as the sparse convolution SC or the submanifold sparse convolution SSC, to avoid dependency on a calculation rule set in a conventional technology, fully release computing power of the processor, improve operation efficiency of the processor, and further improve data processing performance of the processor. The data processing method in this embodiment of this application can be used to implement the sparse convolution SC or the submanifold sparse convolution SSC in a point cloud scenario on the processor (for example, a CPU, a GPU, or an NPU).

It has been verified that, when the data processing method in this embodiment of this application is used to perform the sparse convolution SC or the submanifold sparse convolution SSC, data processing performance of the data processing method is significantly improved compared with common convolution (which may be considered as full dense convolution). For example, Table 1 shows a comparison between a time (unit: ms) consumed for dense operator implementation and a time (unit: ms) consumed for sparse operator implementation, on an NPU (for example, Huawei Ascend 1951), of a convolution operator in a point and voxel-based target recognition convolutional neural network (Point Voxel Region Convolutional Neural Networks, PVRCNN).

**Table 1 Time consumption comparison table**

| | Type | $C_{in}$ | $C_{out}$ | Filter | Stride | Padding | Bias | Time consumed by a dense operator | Time consumed by a matrix operation | Time consumed by a vector operation | Operator speedup |
|---|---|---|---|---|---|---|---|---|---|---|---|
| Input layer | SSC | 4 | 16 | 3 | 1 | 1 | FALSE | 121829 | 646 | 1542 | 55.68 |
| Convolutional layer 1 | SSC | 16 | 16 | 3 | 1 | 1 | FALSE | 121866 | 167 | 1542 | 71.31 |
| Convolutional layer 2 | SC | 16 | 32 | 3 | 2 | 1 | FALSE | 45052 | 915 | 1543 | 18.33 |
| | SSC | 32 | 32 | 3 | 1 | 1 | FALSE | 20755 | 1094 | 1513 | 7.96 |
| | SSC | 32 | 32 | 3 | 1 | 1 | FALSE | 20763 | 1094 | 1513 | 7.96 |
| Convolutional layer 3 | SC | 32 | 64 | 3 | 2 | 1 | FALSE | 9895 | 2618 | 806 | 2.89 |
| | SSC | 64 | 64 | 3 | 1 | 1 | FALSE | 7071 | 1234 | 736 | 3.59 |
| | SSC | 64 | 64 | 3 | 1 | 1 | FALSE | 7053 | 1234 | 736 | 3.58 |
| Convolutional layer 4 | SC | 64 | 64 | 3 | 2 | (0, 1, 1) | FALSE | 2292 | 1214 | 344 | 1.47 |
| | SSC | 64 | 64 | 3 | 1 | 1 | FALSE | 774 | 494 | 278 | 1.00 |
| | SSC | 64 | 64 | 3 | 1 | 1 | FALSE | 776 | 494 | 278 | 1.00 |
| Output layer | SC | 64 | 128 | (3, 1, 1) | (2, 1, 1) | 0 | FALSE | 241 | 84 | 49 | 1.81 |

As shown in Table 1, the dense operator implementation is to implement an operator in a common convolution manner, and the sparse operator implementation is to implement an operator by using the data processing method in this embodiment of this application. Because AI CPU calculation and a matrix operation of a cube unit in the NPU are performed synchronously, only a time consumed by the matrix operation of the cube unit is counted herein, and the time consumed for the sparse operator implementation is evaluated in a manner of adding the time consumed by the matrix operation of the cube unit and a time consumed by a vector operation of a vector unit.

Data in Table 1 indicates that when the convolution operator in the PVRCNN is implemented by using the data processing method in this embodiment of this application, a highest speedup of the convolution operator relative to the dense operator may reach 71.31x, and all operators have no performance degradation.

In addition, in terms of entire-network performance of the PVRCNN, an execution time of a dense entire network is 481.65 ms, and an end-to-end time is 598.05 ms. However, an execution time of the entire network based on the data processing method in this embodiment of this application is 35.32 ms, and an end-to-end time is 39.60 ms. Therefore, according to the data processing method in this embodiment of this application, a 13.64x speedup can be obtained in terms of entire network execution, and a 15. 10x speedup can be obtained in terms of entire network end to end.

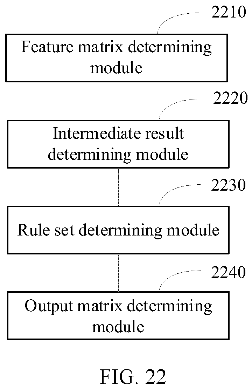

FIG. 22 is a block diagram of a data processing apparatus according to an embodiment of this application. The data processing apparatus is used in a processor. As shown in FIG. 22, the data processing apparatus includes:

a feature matrix determining module 2210, configured to determine a first feature matrix based on an input feature matrix, where the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M;

an intermediate result determining module 2220, configured to determine a first intermediate result based on the first feature matrix and a weight matrix;

a rule set determining module 2230, configured to determine, based on the index matrix corresponding to the input feature matrix and a configuration parameter for the data processing, a rule set for the data processing and an index matrix corresponding to an output matrix; and

an output matrix determining module 2240, configured to determine the output matrix based on the rule set and the first intermediate result.

In a possible implementation, the rule set determining module 2230 includes: an index location determining submodule, configured to determine, based on the index matrix corresponding to the input feature matrix and the configuration parameter for the data processing, a quantity of output points for the data processing and an index location of each output point; an index matrix determining submodule, configured to determine the index matrix corresponding to the output matrix based on the index location of each output point; and a rule set determining submodule, configured to determine the rule set for the data processing based on the quantity of output points, the index matrix corresponding to the input feature matrix, and the configuration parameter for the data processing.

In a possible implementation, the rule set is a set of rules used when the processor recombines the first intermediate result to obtain a second intermediate result. The rules in the rule set indicate a correspondence between a first location in the second intermediate result and a second location in the first intermediate result.

In a possible implementation, the rule set is represented as K rule matrices. The rule matrix includes L rows, and the L rows in the rule matrix are sorted in ascending order of first locations, where L is a positive integer.

In a possible implementation, the output matrix determining module 2240 includes: an intermediate result recombination submodule, configured to recombine the first intermediate result based on the rule set, to obtain the second intermediate result; and an output matrix determining submodule, configured to determine the output matrix based on the second intermediate result.

In a possible implementation, the intermediate result recombination submodule is configured to: read data from the first intermediate result based on a second location indicated by each rule in the rule set; and write the read data onto a first location indicated by each rule, to obtain the second intermediate result.

In a possible implementation, the second intermediate result includes K third feature matrices having a size of L rows and $C_{out}$ columns. The output matrix determining submodule is configured to add the K third feature matrices having a size of L rows and $C_{out}$ columns, to obtain the output matrix, where a size of the output matrix is L rows and $C_{out}$ columns.

In a possible implementation, the feature matrix determining module 2210 includes: an auxiliary data adding submodule, configured to add (N - M) rows of auxiliary data after a last row of the input feature matrix, to obtain the first feature matrix, where at least one of the (N - M) rows is an all-zero row.

In a possible implementation, the weight matrix includes K matrices having a size of $C_{in}$ rows and $C_{out}$ columns. The intermediate result determining module 2220 includes a matrix multiplication submodule, configured to separately multiply the first feature matrix by the K matrices having a size of $C_{in}$ rows and $C_{out}$ columns, to obtain the first intermediate result, where the first intermediate result includes K second feature matrices having a size of N rows and $C_{out}$ columns.

**EP 4 475 083 A1**

An embodiment of this application provides a processor, and the processor is configured to implement the foregoing method.

The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

An embodiment of this application provides an electronic device. The electronic device includes a processor and a memory configured to store instructions that can be executed by the processor. The processor is configured to implement the foregoing method when executing the instructions.

The electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not specially limited in embodiments of this application.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium carrying computer-readable code. When the computer-readable code is run in a processor of an electronic device, the processor in the electronic device performs the foregoing method.

The computer-readable storage medium may be a tangible device that can retain and store instructions for use by an instruction execution device. The computer-readable storage medium may be, but is not limited to, an electrical storage device, a magnetic storage device, an optical storage device, an electromagnetic storage device, a semiconductor storage device, or any suitable combination thereof. More specific examples (a non-exhaustive list) of the computer-readable storage media include: a portable computer disk, a hard disk, a random access memory (Random Access Memory, RAM), a read-only memory (Read-Only Memory, ROM), an erasable programmable read-only memory (Electrically Programmable Read-Only-Memory, EPROM, or flash memory), a static random access memory (Static Random-Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punching card or a groove protrusion structure that stores instructions, and any suitable combination thereof.

The computer-readable program instructions or code described herein can be downloaded to respective computing/processing devices from a computer-readable storage medium or to an external computer or external storage device via a network, such as the Internet, a local area network, a wide area network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instruction used to perform an operation in this application may be an assembly instruction, an instruction set architecture (Instruction Set Architecture, ISA) instruction, a machine instruction, a machine-related instruction, microcode, a firmware instruction, status setting data, or source code or object code written in any combination of one or more programming languages. The programming languages include an object-oriented programming language such as Smalltalk or C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer through any type of network, including a local area network (Local Area Network, LAN) or a wide area network (Wide Area Network, WAN), or may be connected to an external computer (for example, through the Internet by using an Internet service provider). In some embodiments, an electronic circuit, for example, a programmable logic circuit, a field programmable gate array (Field-Programmable Gate Array, FPGA), or a programmable logic array (Programmable Logic Array, PLA), is customized by using status information of a computer-readable program instruction. The electronic circuit may execute the computer-readable program instruction, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

27

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device, so that a series of operations and steps are performed on the computer, the another programmable data processing apparatus, or the another device to produce a computer-implemented process. Therefore, the instructions executed on the computer, the another programmable data processing apparatus, or the another device implement the functions/acts specified in the one or more blocks in the flowcharts and/or block diagrams.

The flowcharts and block diagrams in the accompanying drawings show possible implementation of system architectures, functions, and operations of the apparatus, system, method, and computer program product according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in an order different from that marked in the accompanying drawings. For example, two consecutive blocks may actually be executed substantially in parallel, and may sometimes be executed in a reverse order, depending on a function involved.

It should also be noted that each block in the block diagrams and/or the flowcharts, and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

The foregoing has described embodiments of this application. The foregoing descriptions are examples, are not exhaustive, and are not limited to the disclosed embodiments. Many modifications and changes are apparent to a person of ordinary skill in the art without departing from the scope of the described embodiments. The selection of terms used in this specification is intended to best explain the principles of embodiments, practical applications, or improvements to technologies in the market, or to enable another person of ordinary skill in the art to understand embodiments disclosed in this specification.

**Claims**

**1.** A data processing method, applied to a processor, wherein the method comprises:

determining, by the processor, a first feature matrix based on an input feature matrix, wherein the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M;
determining, by the processor, a first intermediate result based on the first feature matrix and a weight matrix;
determining, by the processor based on an index matrix corresponding to the input feature matrix and a configuration parameter for the data processing, a rule set for the data processing and an index matrix corresponding to an output matrix; and
determining, by the processor, the output matrix based on the rule set and the first intermediate result.

**2.** The method according to claim 1, wherein the determining, based on an index matrix corresponding to the input feature matrix and a configuration parameter for the data processing, a rule set for the data processing and an index matrix corresponding to an output matrix comprises:

determining, based on the index matrix corresponding to the input feature matrix and the configuration parameter for the data processing, a quantity of output points for the data processing and an index location of each output point;

determining the index matrix corresponding to the output matrix based on the index location of each output point; and

determining the rule set for the data processing based on the quantity of output points, the index matrix corresponding to the input feature matrix, and the configuration parameter for the data processing.

3. The method according to claim 1 or 2, wherein the rule set is a set of rules used when the processor recombines the first intermediate result to obtain a second intermediate result, and the rules in the rule set indicate a correspondence between a first location in the second intermediate result and a second location in the first intermediate result.

4. The method according to claim 3, wherein the rule set is represented as K rule matrices, the rule matrix comprises L rows, the L rows in the rule matrix are sorted in ascending order of first locations, and L is a positive integer.

5. The method according to any one of claims 1 to 4, wherein the determining the output matrix based on the rule set and the first intermediate result comprises:

recombining the first intermediate result based on the rule set, to obtain the second intermediate result; and determining the output matrix based on the second intermediate result.

6. The method according to claim 5, wherein the recombining the first intermediate result based on the processing rule set, to obtain the second intermediate result comprises:

reading data from the first intermediate result based on a second location indicated by each rule in the rule set; and writing the read data onto a first location indicated by each rule, to obtain the second intermediate result.

7. The method according to claim 5, wherein the second intermediate result comprises K third feature matrices having a size of L rows and $C_{out}$ columns, and K and $C_{out}$ are positive integers; and
the determining the output matrix based on the second intermediate result comprises:
adding the K third feature matrices having a size of L rows and $C_{out}$ columns, to obtain the output matrix, wherein a size of the output matrix is L rows and $C_{out}$ columns.

8. The method according to any one of claims 1 to 7, wherein the determining a first feature matrix based on an input feature matrix comprises:
adding (N - M) rows of auxiliary data after a last row of the input feature matrix, to obtain the first feature matrix, wherein at least one of the (N - M) rows is an all-zero row.

9. The method according to any one of claims 1 to 8, wherein the weight matrix comprises K matrices having a size of $C_{in}$ rows and $C_{out}$ columns; and
the determining a first intermediate result based on the first feature matrix and a weight matrix comprises:
separately multiplying the first feature matrix by the K matrices having a size of $C_{in}$ rows and $C_{out}$ columns, to obtain the first intermediate result, wherein the first intermediate result comprises K second feature matrices having a size of N rows and $C_{out}$ columns.

10. A data processing apparatus, used in a processor, wherein the apparatus comprises:

a feature matrix determining module, configured to determine a first feature matrix based on an input feature matrix, wherein the input feature matrix is a feature matrix obtained by processing data that is obtained by a sensor, a size of the input feature matrix is M rows and $C_{in}$ columns, a size of the first feature matrix is N rows and $C_{in}$ columns, M, N, and $C_{in}$ are positive integers, and N>M;

an intermediate result determining module, configured to determine a first intermediate result based on the first feature matrix and a weight matrix;

a rule set determining module, configured to determine, based on an index matrix corresponding to the input feature matrix and a configuration parameter for the data processing, a rule set for the data processing and an index matrix corresponding to an output matrix; and

an output matrix determining module, configured to determine the output matrix based on the rule set and the first intermediate result.

**11.** The apparatus according to claim 10, wherein the rule set determining module comprises:

an index location determining submodule, configured to determine, based on the index matrix corresponding to the input feature matrix and the configuration parameter for the data processing, a quantity of output points for the data processing and an index location of each output point;
an index matrix determining submodule, configured to determine the index matrix corresponding to the output matrix based on the index location of each output point; and
a rule set determining submodule, configured to determine the rule set for the data processing based on the quantity of output points, the index matrix corresponding to the input feature matrix, and the configuration parameter for the data processing.

**12.** The apparatus according to claim 10 or 11, wherein the rule set is a set of rules used when the processor recombines the first intermediate result to obtain a second intermediate result, and the rules in the rule set indicate a correspondence between a first location in the second intermediate result and a second location in the first intermediate result.

**13.** The apparatus according to claim 12, wherein the rule set is represented as K rule matrices, the rule matrix comprises L rows, the L rows in the rule matrix are sorted in ascending order of first locations, and L is a positive integer.

**14.** The apparatus according to any one of claims 10 to 13, wherein the output matrix determining module comprises:

an intermediate result recombination submodule, configured to recombine the first intermediate result based on the rule set, to obtain the second intermediate result; and
an output matrix determining submodule, configured to determine the output matrix based on the second intermediate result.

**15.** The apparatus according to claim 14, wherein the intermediate result recombination submodule is configured to:

read data from the first intermediate result based on a second location indicated by each rule in the rule set; and
write the read data onto a first location indicated by each rule, to obtain the second intermediate result.

**16.** The apparatus according to claim 14, wherein the second intermediate result comprises K third feature matrices having a size of L rows and $C_{out}$ columns, and K and $C_{out}$ are positive integers; and
the output matrix determining submodule is configured to:
add the K third feature matrices having a size of L rows and $C_{out}$ columns, to obtain the output matrix, wherein a size of the output matrix is L rows and $C_{out}$ columns.

**17.** The apparatus according to any one of claims 10 to 16, wherein the feature matrix determining module comprises:
an auxiliary data adding submodule, configured to add (N - M) rows of auxiliary data after a last row of the input feature matrix, to obtain the first feature matrix, wherein at least one of the (N - M) rows is an all-zero row.

**18.** The apparatus according to any one of claims 10 to 17, wherein the weight matrix comprises K matrices having a size of $C_{in}$ rows and $C_{out}$ columns; and
the intermediate result determining module comprises:
a matrix multiplication submodule, configured to separately multiply the first feature matrix by the K matrices having a size of $C_{in}$ rows and $C_{out}$ columns, to obtain the first intermediate result, wherein the first intermediate result comprises K second feature matrices having a size of N rows and $C_{out}$ columns.

**19.** A processor, wherein the processor is configured to implement the method according to any one of claims 1 to 9.

**20.** An electronic device, comprising:

a processor; and
a memory, configured to store instructions that can be executed by the processor, wherein
when the processor is configured to execute the instructions, the method according to any one of claims 1 to 9 is implemented.

21. A non-volatile computer-readable storage medium, storing computer program instructions, wherein when the computer program instructions are executed by a processor, the method according to any one of claims 1 to 9 is implemented.

22. A computer program product, comprising computer-readable code or a non-volatile computer-readable storage medium carrying computer-readable code, wherein when the computer-readable code is run in an electronic device, a processor in the electronic device performs the method according to any one of claims 1 to 9.

FIG. 1

44  41  46

Cache → Cube unit → Cache

45

Cache →

22

47  42

Cache ↔ Vector unit

48  43  49

SPR | Scalar unit | GPR

FIG. 2

$C_{in}$  310

| $C_{in}$ |
|---|
| P[0] |
| P[1] |
| ... |
| P[M–2] |
| P[M–1] |

M

FIG. 3a

Dim  320

| Dim |
|---|
| Index_in[0] |
| Index_in[1] |
| ... |
| Index_in[M–2] |
| Index_in[M–1] |

M

FIG. 3b

FIG. 3c

S410
A processor determines a first feature matrix based on an input feature matrix

S420
The processor determines a first intermediate result based on the first feature matrix and a weight matrix

S430
The processor determines, based on an index matrix corresponding to the input feature matrix and a configuration parameter for data processing, a rule set for the data processing and an index matrix corresponding to an output matrix

S440
The processor determines the output matrix based on the rule set and the first intermediate result

FIG. 4

$C_{in}$ — 310

| | |
|---|---|
| M | P[0] |
| | P[1] |
| | ... |
| | P[M−2] |
| | P[M−1] |

→

$C_{in}$ — 510

| | |
|---|---|
| N | P[0] |
| | P[1] |
| | ... |
| | P[M−2] |
| | P[M−1] |
| | P[M] |
| | ... |
| | P[N−1] |

} N−M

FIG. 5

$C_{out}$

K

$Y_{K-1}$

$Y_{K-2}$

$Y_1$

$Y_0$

N

610

FIG. 6a

$C_{out}$ — 620

| $Y_i[0]$ |
|---|
| $Y_i[1]$ |
| ... |
| $Y_i[M-2]$ |
| $Y_i[M-1]$ |
| $Y_i[M]$ |
| ... |
| $Y_i[N-1]$ |

N

FIG. 6b

FIG. 7

First memory — 810

Input feature matrix — 710

Weight matrix — 720

First data obtaining circuit — 820

Second memory — 830

First feature matrix — 730

Weight matrix — 720

First calculation circuit — 840

Third memory — 850

First intermediate result — 750

FIG. 8

Dim — 910

| | |
|---|---|
| | Index_out[0] |
| | Index_out[1] |
| L | … |
| | Index_out[L–2] |
| | Index_out[L–1] |

FIG. 9

— 1010

FIG. 10

1110

| | |
|---|---|
| 0 | 8 |
| 1 | 8 |
| 2 | 8 |
| 3 | 8 |
| 4 | 3 |
| 5 | 8 |
| 6 | 5 |
| 7 | 8 |

FIG. 11

720

Weight matrix

1210

Configuration parameter

1220

Second calculation unit

1230

Rule set

1240

Index matrix corresponding to an output matrix

FIG. 12

810

First memory

720

Weight matrix

1210

Configuration parameter

1310

Second calculation circuit

1320

Fourth memory

1230

Rule set

1240

Index matrix corresponding to an output matrix

FIG. 13

| | | 1110 |
|---|---|---|
| 0 | 8 | |
| 1 | 8 | |
| 2 | 8 | |
| 3 | 8 | |
| 4 | 3 | |
| 5 | 8 | |
| 6 | 5 | |
| 7 | 8 | |

$C_{out}$ — 1420

| |
|---|
| $Y_1[8]$ |
| $Y_1[8]$ |
| $Y_1[8]$ |
| $Y_1[8]$ |
| $Y_1[3]$ |
| $Y_1[8]$ |
| $Y_1[5]$ |
| $Y_1[8]$ |

8

$C_{out}$ — 1410

| |
|---|
| $Y_1[0]$ |
| $Y_1[1]$ |
| $Y_1[2]$ |
| $Y_1[3]$ |
| $Y_1[4]$ |
| $Y_1[5]$ |
| $Y_1[6]$ |
| $Y_1[7]$ |
| $Y_1[8]$ |

9

FIG. 14

FIG. 15

FIG. 16

810

Third memory

750

First intermediate result

1320

Fourth memory

1230

Rule set

1710

Second data obtaining circuit

1720

Fifth memory

1610

Second intermediate result

FIG. 17

1610

Second intermediate result

1810

Third calculation unit

1820

Output matrix

FIG. 18

1720

Fifth memory

1610

Second intermediate result

1910

Third calculation circuit

1920

Sixth memory

1820

Output matrix

FIG. 19

C_out — 2010

| Q[0] |
|---|
| Q[1] |
| ... |
| Q[L-2] |
| Q[L-1] |

L

FIG. 20

S2101

Obtain a weight matrix, an input feature matrix, and an index matrix corresponding to the input feature matrix

S2102

Determine a first feature matrix based on the input feature matrix

S2104

Determine, based on the index matrix corresponding to the input feature matrix and a configuration parameter for data processing, a rule set for the data processing and an index matrix corresponding to an output matrix

S2102

Determine a first intermediate result based on the first feature matrix and the weight matrix

S2105

Recombine the first intermediate result based on the rule set, to obtain a second intermediate result

S2106

Determine the output matrix based on the second intermediate result

FIG. 21

2210

Feature matrix determining module

2220

Intermediate result determining module

2230

Rule set determining module

2240

Output matrix determining module

FIG. 22

| | International application No. |
|---|---|
| | PCT/CN2023/073867 |

**A.   CLASSIFICATION OF SUBJECT MATTER**

G06T 17/00 (2006.01) i

According to International Patent Classification (IPC) or to both national classification and IPC

**B.   FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, DWPI, ENTXT, ENTXTC, CNKI: 处理器, 传感器, 点云, 点云数据, 规则集, 计算规则, 计算规则集, 矩阵, 矩阵运算, 权重, 权重矩阵, 输出矩阵, 输入矩阵, 输入特征矩阵, 素体数据, 索引, 索引矩阵, 特征矩阵, 稀疏, 依赖, 中间结果, matrix, rule, rulebook, sparse, intermediate result, sparse convolution, output matrix, point cloud, input matrix, characteristic matrix, index

**C.   DOCUMENTS CONSIDERED TO BE RELEVANT**

| Category* | Citation of document, with indication, where appropriate, of the relevant passages | Relevant to claim No. |
|---|---|---|
| A | CN 112991142 A (TENCENT TECHNOLOGY (SHENZHEN) CO., LTD.), 18 June 2021 (18.06.2021), entire document | 1-22 |
| A | CN 110929854 A (HUAWEI TECHNOLOGIES CO., LTD.), 27 March 2020 (27.03.2020), entire document | 1-22 |
| A | CN 113888748 A (BEIJING JINGWEI HIRAIN TECHNOLOGIES CO., LTD.), 04 January 2022 (04.01.2022), entire document | 1-22 |
| A | CN 106485676 A (TIANJIN UNIVERSITY), 08 March 2017 (08.03.2017), entire document | 1-22 |
| A | US 2021090328 A1 (INTEL CORP.), 25 March 2021 (25.03.2021), entire document | 1-22 |

☐ Further documents are listed in the continuation of Box C.          ☒ See patent family annex.

| \*       Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| 17 February 2023 | 27 February 2023 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Yankun<br><br>Telephone No. (+86) 62412330 |
|---|---|

Form PCT/ISA/210 (second sheet) (July 2022)

## INTERNATIONAL SEARCH REPORT
Information on patent family members

| | International application No. |
|---|---|
| | PCT/CN2023/073867 |

| Patent Documents referred in the Report | Publication Date | Patent Family | Publication Date |
|---|---|---|---|
| CN 112991142 A | 18 June 2021 | WO 2022206556 A1 | 06 October 2022 |
| CN 110929854 A | 27 March 2020 | None | |
| CN 113888748 A | 04 January 2022 | None | |
| CN 106485676 A | 08 March 2017 | CN 106485676 B | 11 October 2019 |
| US 2021090328 A1 | 25 March 2021 | CN 114595221 A | 07 June 2022 |

Form PCT/ISA/210 (patent family annex) (July 2022)

**REFERENCES CITED IN THE DESCRIPTION**

**Patent documents cited in the description**

• CN 202210209676